(19) Europäisches Patentamt
European Patent Office
Office européen des brevets

(11) EP 4 559 965 A1

(12) EUROPÄISCHE PATENTANMELDUNG

(43) Veröffentlichungstag:
**28.05.2025 Patentblatt 2025/22**

(21) Anmeldenummer: **23211667.3**

(22) Anmeldetag: **23.11.2023**

(51) Internationale Patentklassifikation (IPC):
***C08L 9/06*** *(2006.01)* ***C08F 8/06*** *(2006.01)*
***C08F 8/32*** *(2006.01)*

(52) Gemeinsame Patentklassifikation (CPC):
(C-Sets verfügbar)
**C08L 9/06; C08F 8/06; C08F 8/32** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **BASF SE**
**67056 Ludwigshafen am Rhein (DE)**

(72) Erfinder:
- **Wesp, Svenja**
  **67056 Ludwigshafen am Rhein (DE)**
- **Mustonen, Tero**
  **67056 Ludwigshafen am Rhein (DE)**
- **Feldmann, Oliver**
  **67056 Ludwigshafen am Rhein (DE)**
- **Ramadani, Fehime**
  **67056 Ludwigshafen am Rhein (DE)**
- **Lederhose, Paul**
  **67056 Ludwigshafen am Rhein (DE)**

(74) Vertreter: **BASF IP Association**
**BASF SE**
**GBI - Z078**
**67056 Ludwigshafen (DE)**

(54) **POLYISOBUTENDERIVATE ALS ADDITIV IN KAUTSCHUKEN**

(57) Die vorliegende Erfindung betrifft die Verwendung verschiedener Polyisobutenderivate als Additive in Kautschuken, besonders zur Dispergierung und Kompatibilisierung von Zusatzstoffen in Kautschuken für Fahrzeugreifen.Ruß, Zinkoxid und Silikaten.



Processed by Luminess, 75001 PARIS (FR)

(Forts. nächste Seite)

(52) Gemeinsame Patentklassifikation (CPC): (Forts.)

C-Sets
**C08F 8/06, C08L 23/22;**
**C08F 8/32, C08L 23/22;**
**C08L 9/06, C08K 3/36, C08L 23/26;**
**C08L 9/06, C08L 23/22, C08K 3/36**

## Beschreibung

Die vorliegende Erfindung betrifft die Verwendung doppelbindungshaltiger Polyisobutene und verschiedener Polyisobutenderivate als Additive in Kautschuken, besonders zur Dispergierung und Kompatibilisierung von Zusatzstoffen in Kautschuken für Fahrzeugreifen.

Bei modernen Fahrzeugreifen werden erhöhte Anforderungen an deren Eigenschaften nicht zuletzt unter Nachhaltigkeitsaspekten gestellt, insbesondere an einen geringen Rollwiderstand, um den Kraftstoffverbrauch und damit verbundene Emissionen zu senken, und eine hohe Abriebsfestigkeit, um die Emission von Reifenabrieb, beispielsweise in Form von Mikroplastik, an die Umgebung zu verringern und die Lebensdauer der Reifen zu erhöhen, ohne gleichzeitig die Haftung der Reifen auf dem Untergrund unter verschiedenen Bedingungen (z.B. Temperatur, Wetterbedingungen, Straßenzustand) zu verschlechtern.

In den Kautschukmassen können die Fahrzeugreifen zur Verbesserung dieser Eigenschaften verschiedene Füllmaterialien sowie Vulkanisationsbeschleuniger enthalten. Bei den Füllmaterialien handelt es sich häufig um anorganische Materialien, wie Ruß, Silikate oder Zinkoxid, bei den Kautschuken dagegen um unpolare Polymere, somit ist die Mischbarkeit und Verträglichkeit dieser Komponenten aufgrund ihrer unterschiedlichen Polarität oftmals schlecht. Bei anderen Additiven, wie Vulkanisationsbeschleunigern und -aktivatoren, Antioxidantien sowie Plastifizierern, ist eine einheitliche Verteilung innerhalb des Kautschuks erforderlich, damit sie gleichmäßig ihre Wirkung entfalten können.

Somit besteht ein Bedarf an Additiven, mit denen Füllmaterialien, wie Ruß, Silikate oder Zinkoxid, sowie die anderen genannten Additive besser in Kautschuke eingearbeitet werden können und die Funktionen in den Kautschuken bzw. bei deren Herstellung erfüllen können, beispielsweise als Antioxidans, Aktivator oder Plastifizierer.

Ferner werden bei der Herstellung von Kautschukmassen für Reifen für die bessere Vermischung von Ruß bzw. Silica oftmals Silane als Prozesshilfsmittel eingesetzt, die im Verlauf des Prozesses Alkohole, besonders Ethanol freisetzen. Dies stellt aus arbeitsschutzrechtlichen sowie Umweltaspekten eine zu vermeidende oder zu verringernde Emission dar.

Aus WO 2007/70063 ist es bekannt, Polyisobutenbernsteinsäureanhydrid (PIBSA) als Prozeßhilfsmittel in bromierte Butylkautschuke einzuarbeiten, was die Verarbeitung erleichternde Viskosität sowie Härtungszeit bewirkt. Für das Molekulargewicht des PIBSA wird ein Bereich von 400 bis 5000 und eine Anhydridfunktionalität von 0,5 bis 2,0 mol% angegeben, wobei das zahlenmittlere Molekulargewicht bis zu 10000 gehen kann, ohne daß dafür kommerziell zugängliche Produkte angegeben werden.

Andere Wirkungen als als Prozeßhilfsmittel wird für das Polyisobutenbernsteinsäureanhydrid nicht angegeben und sind aus den Beispielen nicht herzuleiten.

Aus DE 19941166 A1 ist die Wirkung von Polyisobutenbernsteinsäureanhydrid bekannt, in einer Gummizusammensetzung das Griffvermögen und die Abriebsbeständigkeit zu verbessern.

WO 2009/158604 beschreibt den Einsatz von Metallsalzen von Polyisobutenbernsteinsäuren mit einem zahlenmittleren Molekulargewicht von 250 bis 100000 in Gummimischungen zur Verbesserung der Eigenschaften der Gummimischungen.

Die Aufgabe wurde gelöst durch die Verwendung von mindestens eine Doppelbindung aufweisendem

- Polyisobuten (A) oder
- Derivaten von Polyisobuten (B)
  zur Verbesserung mindestens einer der folgenden Eigenschaften
- Dispersionskoeffizient
- Teilchengröße
- Nasshaftung
- Abriebsfestigkeit
- Rollwiderstand

von Kautschuke-enthaltenden Reifen

oder zum Abfangen von Alkoholen, die während der Reifenherstellung freigesetzt werden,

wobei die Polyisobutenderivate (B), enthaltend mindestens eine, bevorzugt mindestens zwei isolierte Doppelbindungen, erhältlich sind durch Umsetzung

- mindestens eines Polyisobutenyl-substituierten Bernsteinsäureanhydrids (PIBSA) mit
- mindestens einem ungesättigten Alkohol der Formel

$$HO\text{-}R^{15}\text{-}CR^{16}\text{=}CR^{17}R^{18}$$

und/oder

- mindestens einem einfach ungesättigten Amin der Formel

$$H_2N\text{-}R^{19}\text{-}CR^{20}{=}CR^{21}R^{22}$$

oder

$$HN(\text{-}R^{19}\text{-}CR^{20}{=}CR^{21}R^{22})_2.$$

Die Erfindung wird im folgenden näher erläutert:

**Kautschuk**

In Fahrzeugreifenmischungen, insbesondere für die Laufflächen, werden beispielhaft Mischungen von Butylkautschuk mit Dien-Elastomeren und andere Bestandteile eingesetzt.

Derartige Mischungen sind beispielsweise beschrieben in WO2019/199839 A1, Absatz [0008] bis [0070], was durch Bezugnahme Bestandteil der vorliegenden Offenbarung sei.

Unter den Kautschuken werden im Rahmen dieser Schrift Dien-Elastomere, also Homo- und Copolymere von Dien-Monomeren verstanden, bevorzugt Naturkautschuk, Polybutadiene, Styrol-Butadien-Copolymere und Polyisopren und deren Mischungen, beispielsweise Mischungen aus Naturkautschuk und Styrol-Butadien-Copolymeren, aus Naturkautschuk und Polybutadienen oder Naturkautschuk und Polyisoprenen.

Die Dien-Elastomere weisen in der Regel eine Glasübergangstemperatur Tg von -75 bis 0 °C auf

Polybutadiene

Bei diesen handelt es sich um Polymere von 1,3-Dienen, bevorzugt Buta-1,3-dien mit einer cis-1,4-Verknüpfung von mindestens 90%, bevorzugt mindestens 95%.

Andere Comonomere können in geringen Mengen einpolymerisiert werden.

Das verwendete Elastomer ist vorzugsweise Polybutadien mit mehr als 90% cis-1,4-Verknüpfungen, das nach bekannten Katalyseverfahren mit Übergangsmetallverbindungen erhalten ist, wie beispielsweise in der französischen Patentanmeldung FR-A-1436607 beschrieben ist.

Beispiele für geeignete konjugierte Diene sind insbesondere 1,3-Butadien, Isopren und 2,3-Dimethyl-1,3-butadien. Es können auch aromatische Vinylverbindungen einpolymerisiert werden, geeignete aromatische Vinylverbindungen sind insbesondere Styrol, o-, m- und p-Methylstyrol oder das handelsübliche "Vinyltoluol"-Gemisch.

Styrol-Butadien-Copolymere

Typische Styrol-Butadien-Copolymere weisen einen Gehalt von Styrol von 5 bis 60, bevorzugt 20 bis 50 Gew% auf, wobei die restlichen Comonomere überwiegend 1,3-Butadien sind. Der Gehalt von 1,2-Einheiten beträgt in der Regel 4 bis 80 mol% und der von cis-1,4-Einheiten mehr als 80 mol%.

Denkbar sind such Styrol-Butadien-Isopren-Terpolymere.

Polyisopren

Darunter werden Homo- und Copolymere von Isopren verstanden, die natürlichen oder bevorzugt synthetischen Ursprungs sein können.

Bei diesen beträgt der Anteil von cis-1,4-Einheiten mindestens 90 mol%, bevorzugt mindestens 98 mol%.

Butylkautschuk

Dabei handelt es sich um Copolymere von 85 bis 99,5 mol%, bevorzugt 90 bis 99,5, besonders bevorzugt 95 bis 99,5 mol% $C_4$-$C_7$-Isoolefinen mit 0,5 bis 15 mol%, bevorzugt 0,5 bis 10, besonders bevorzugt 0,5 bis 5 mol% $C_4$-$C_{14}$-konjuguierten Dienen.

Bevorzugtes Isoolefin ist Isobuten, bevorzugte konjugierte Diene sind 1,3-Butadien und Isopren, besonders bevorzugt Isopren.

Der Butylkautschuk weist ein viskositätsmittleres Molekulargewicht von 100000 bis 1500000, bevorzugt 250000

bis 800000 auf.

Die Ausgangsstoffe für die Synthesekautschuke, bevorzugt 1,3-Butadien, Isopren, 2,3-Dimethyl-1,3-butadien, Styrol und/oder Isobuten, besonders bevorzugt 1,3-Butadien, Isopren und/oder Isobuten können zumindest teilweise, bevorzugt vollständig aus nachwachsenden Quellen stammen. Deren Anteil an den gesamten eingesetzten Monomeren, gemessen gemäß ASTM D 6866 (siehe unten), beträgt dabei mit Vorteil mindestens 1 Gew%, bevorzugt mindestens 2, besonders bevorzugt mindestens 10, ganz besonders bevorzugt mindestens 25 und insbesondere mindestens 50 Gew%. Der Anteil an Monomeren aus nachwachsenden Quellen kann bis zu 100 Gew% betragen, bevorzugt bis zu 95, besonders bevorzugt bis zu 90, ganz besonders bevorzugt bis zu 85 und insbesondere bis zu 80 Gew% betragen.

Plastifizierer

Plastifizierer (Prozeßöle) verbessern die Verarbeitbarkeit der Zusammensetzung, zumeist handelt es sich bei diesen um Ester von aliphatischen Säuren, beispielsweise Fettsäureester und Fettsäureglyceride, bevorzugt natürlich vorkommende Öle, wie Sonnenblumenöl oder Rapsöl, oder Kohlenwasserstoffe, wie paraffinische Öle, aromatische Öle, napthenische Petroleumöle und Polybutenöle.

Weiterhin als Plastifizierer geeignet sind solche Harze, wie sie als Tackifier für Klebstoffe und Farben bekannt sind. Bei diesen handelt es sich bevorzugt um Copolymere von Cs-Fraktionen von Naphtha oder Steamcrackerausträgen mit Vinylaromaten, besonders um Copolymere von 1,3-Butadien, 1-Buten, 2-Butenen, 1,2-Butadien, 3-Methyl-1-buten, 1,4-Pentadien, 1-Penten, 2-Methyl-1-buten, 2-Pentene, Isopren, Cyclopentadien, das auch als Dicyclopentadien Dimer vorliegen kann, Piperylen, Cyclopenten, 1-Methylcyclopenten, 1-Hexen, Methylcyclopentadiene oder Cyclohexen. Besonders handelt es sich um Copolymere von Cyclopentadien und/oder Dicyclopentadien mit Vinylaromaten, besonders Styrol, $\alpha$-Methylstyrol, o-, m- oder p-Methylstyrol oder Divinylstyrol. Diese Vinylaromaten sind Bestandteil der $C_9$-Fraktionen von Naphtha oder Steamcrackerausträgen.

Bevorzugte Harze als Plastifizierer sind Cyclopentadien und/oder Dicyclopentadien-Copolymere, Cyclopentadien und/oder Dicyclopentadien-Styrol-Copolymere, Polylimonene, Limonen-Styrol-Copolymere, Limonen- Cyclopentadien und/oder Dicyclopentadien-Copolymere, Cs-Fraktions-Styrol-Copolymere sowie $C_5$-Fraktions-$C_9$-Fraktions-Copolymere.

Füllmittel

Beispiele für Füllmittel sind Kalziumcarbonat, Tone, Glimmer, Kieselerde, Silikate, Talkum, Bentonit, Titandioxid, Aluminiumoxid, Zinkoxid und Ruß sein, bevorzugt Zinkoxid, Silikate und Ruß,

Typische Teilchengrößen liegen im Bereich von 0,0001 bis 100 $\mu$m.

Unter Silikaten werden hier Derivate der Kieselsäure verstanden, auch in Form ihrer Kalzium- oder Aluminiumverbindungen. Die Silikate können aus Lösung oder pyrogen erhalten werden und kolloid oder gefällt vorliegen. Bevorzugt werden hochdispergierbare Silikate eingesetzt.

Die BET-Oberfläche beträgt in der Regel weniger als 450 $m^2$/g, bevorzugt 30 bis 400, besonders bevorzugt von 100 bis 250 $m^2$/g und vorzugsweise von 130 bis 220 $m^2$/g, eine CTAB-Oberfläche von 100 bis 250 $m^2$/g und vorzugsweise von 150 bis 200 $m^2$/g, eine ölaufnahme an DBP von 150 bis 250 ml/100 g sowie eine mittlere Projektionsfläche der Aggregate von mehr als 8500 $nm^2$ und vorzugsweise 9000 bis 11000 $nm^2$ vor dem Einsatz und von 7000 bis 8400 $nm^2$ nach dem thermomechanischen Mischen mit einem Elastomer aufweist. Das ausgewählte spezielle Siliciumdioxid kann allein oder in Gegenwart anderer Füllstoffe, wie beispielsweise von Ruß oder eines anderen herkömmlichen Siliciumdioxids, eingesetzt werden.

Als in der besonders geeignetes Siliciumdioxid eignet sich beispielsweise das nach dem in der europäischen Patentanmeldung EP-A-157703 beschriebenen Verfahren erhaltene Siliciumdioxid.

Die BET-Oberfläche, die CTAB-Oberfläche sowie die Ölaufnahme werden nach den in der europäischen Patentanmeldung EP-A-157703 beschriebenen Verfahren gemessen. Die mittlere Projektionsfläche des Siliciumdioxids wird ermittelt nach dem Verfahren wie beschrieben in DE 69206445 T2, Seite 8, letzter Absatz bis Seite 9, erster Absatz.

Antioxidans

Antioxidantien wirken gegen einen oxidativen Abbau, insbesondere sind p-Phenylendiamine zu nennen, beispielsweise N,N'-alkyl- oder aryldisubstituierte p-Phenylendiamine, besonders bevorzugt ist N-(1,3-Dimethylbutyl)-N'-phenyl-1,4-phenylenediamin.

Härter, Vernetzer, Aktivatoren

Die Kautschukzusammensetzungen werden mit Hilfe mindestens eines Härters und mindestens eines Vernetzers umgesetzt, die dem Fachmann auf diesem Gebiet bekannt sind.

Beispiele dafür sind organische Peroxide und Polyamine.

Insbesondere wird dafür Schwefel als Vulkanisierungsagens verwendet.

Als Aktivatoren für den Vulkanisierungsprozeß werden Amine, Diamine, Guanidine, Thioharnstoffe, Thiatole, Thiram, Sulfenamide, Sulfenimide, Thiocarbamate und Xanthate eingesetzt. Besonders geeignet ist N-Cyclohexylbenzothiazol-2-sulfenamid (CBS).

Als Vernetzer können Schwefel, Metalloxide, Fettsäuren, besonders Stearinsäure, und insbesondere Organosilan-Vernetzer (siehe bei den Silan-Kopplungsmitteln) eingesetzt werden, beispielsweise Vinyl triethoxysilan, Vinyltris-(beta-methoxyethoxy)silan, Methacryloylpropyltrimethoxysilan, gamma-Amino-propyl triethoxysilan, gamma-Mercaptopropyltrimethoxysilan und dergleichen.

In einer besonderen Ausführungsform wird bis-(3-Triethoxysilylpropyl)tetrasulfid eingesetzt.

Als Metalloxide können eingesetzt werden ZnO, CaO, MgO, $Al_2O_3$, CrOs, $TiO_2$, FeO, $Fe_2O_3$ und NiO. Diese können als Oxide oder als die entsprechende Fettsäureverbindung eingesetzt werden, bevorzugt als Stearat.

Unter diesen ist Zinkoxid bevorzugt.

Silan-Kopplungsmittel

Typische Kopplungsmittel sorgen für eine stabile chemische und/oder physikalische Wechselwirkung zwischen den einzelnen Bestandteilen, beispielsweise Füllmittel und Kautschuken.

Typischerweise handelt es sich um Schwefel-haltige Verbindungen, Organosilane oder Polysiloxane.

Bevorzugt sind solche Kopplungsmittel, die eine Polysulfidgruppe und eine Alkoxysilylgruppe tragen, besonders bevorzugt sind Silane polysulfide, beispielsweise Bis(($C_1$-$C_4$)alkoxy($C_1$-$C_4$)alkylsilyl($C_1$-$C_4$)alkyl)polysulfide, (besonders Disulfide, Trisulfide oder Tetrasulfide), wie zum Beispiel Bis(3-trimethoxysilylpropyl) polysulfid oder Bis(3-triethoxysilylpropyl)polysulfid. Weitere Beispiele sind Bis(3-triethoxysilylpropyl)tetrasulfid (TESPT) der Formel $[(C_2H_5O)_3Si(CH_2)_3S_2]_2$, oder Bis(triethoxysilylpropyl)disulfid (TESPD) der Formel $[(C_2H_5O)_3Si(CH_2)_3S]_2$. Andere Beispiele sind Bis(mono($C_1$-$C_4$)alkoxy di($C_1$-$C_4$)alkylsilylpropyl)polysulfid, besonders Disulfide, Trisulfide oder Tetrasulfide), insbesondere Bis(monoethoxydimethylsilylpropyl)tetrasulfid.

Zusammensetzung

Der Butylkautschuk macht beispielsweise in der Laufflächenmischung eine Fahrzeugreifens 5 bis 40, bevorzugt 5 bis 25 phr aus. Mit "phr" (parts per hundred rubber) wird die Zusammensetzung bezogen auf die 100 Massenteile des Polymerblends angegeben.

Polybutadiene können 30 bis 50 phr, Styrol-Butadien-Copolymere 40 bis 70 und Polyisoprene 0 bis 20 phr ausmachen, mit der Maßgabe, daß die Summe dieser Polymere 100 phr ergeben. Alle Nicht-Kautschukbestandteile werden auf die Summe dieser Polymere bezogen.

Der Anteil der Füllmittel, besonders Ruß und Silikate, beträgt in der Regel 20 bis 200 phr, bevorzugt 30 bis 150 phr.

Der Anteil an Plastifizierern beträgt in der Regel 10 bis 30 phr.

Erfindungsgemäß werden diesen Kautschuken Polyisobuten (A) oder bestimmte Derivate von Polyisobuten (B) zugesetzt, die mindestens eine Doppelbindung, bevorzugt ein bis vier Doppelbindungen, besonders bevorzugt ein bis drei und ganz besonders bevorzugt bevorzugt eine oder zwei Doppelbindungen aufweisen.

Bei den Doppelbindungen handelt es sich um isolierte Doppelbindungen, Doppelbindung die mit anderen C=C-Doppelbindungen oder Carbonylgruppen in Konjugation stehen, werden dabei nicht berücksichtigt.

Polyisobuten und Polyisobutenderivate werden im folgenden näher beschrieben:
Bei dem Polyisobuten, das der Kette zugrundeliegt handelt es sich um iso-Buten in einpolymerisierter Form enthaltende Homo- und Copolymere mit einem zahlenmittleren Molekulargewicht Mn von 500 bis 50000, bevorzugt 550 bis 40000, besonders bevorzugt 650 bis 30000, ganz besonders bevorzugt 750 bis 20000 und insbesondere 900 bis 15000.

In einer bevorzugten Ausführungsform handelt es sich bei dem Polyisobuten um solches mit einem Mn von 950 bis 1050. Unter diesen Polyisobutenen sind solche mit einem hohen Gehalt an terminal angeordneten ethylenischen Doppelbindungen ($\alpha$-Doppelbindungen) bevorzugt, besonders solche mit einem Gehalt an $\alpha$-Doppelbindungen von wenigstens 50 Mol-%, bevorzugt wenigstens 60 Mol-%, besonders bevorzugt wenigstens 70 Mol-% und ganz besonders bevorzugt wenigstens 80 Mol-%. Diese werden als hochreaktive Polyisobutene bezeichnet.

In einer weiteren bevorzugten Ausführungsform handelt es sich bei dem Polyisobuten um solches mit einem Mn von 2300 bis 10000.

Für die Herstellung solcher iso-Buten in einpolymerisierter Form enthaltender Homo- oder Copolymere eignen sich als Isobuten-Quelle sowohl Rein-Isobuten als auch Isobuten-haltige C4-Kohlenwasserstoffströme, beispielsweise C4-Raffinate, insbesondere "Raffinat 1", C4-Schnitte aus der Isobutan-Dehydrierung, C4-Schnitte aus Steamcrackern

und aus FCC-Crackern (fluid catalysed cracking), sofern sie weitgehend von darin enthaltenem 1,3-Butadien befreit sind. Ein C4-Kohlenwasserstoffstrom aus einer FCC-Raffinerieeinheit ist auch als "b/b"-Strom bekannt. Weitere geeignete Isobuten-haltige C4-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C4-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C4-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzweigten Butene im Raffinat 1 in der Regel praktisch inert und nur das Isobuten wird polymerisierteiner bevorzugten Ausführungsform setzt man als Monomerquelle für die Polymerisation einen technischen C4-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das Isobuten bzw. der Isobuten-haltige C4-Kohlenwasserstoffstrom kann zumindest teilweise, bevorzugt vollständig aus nachwachsenden Quellen stammen, wie es beispielsweise in WO 2012/40859 A1 beschrieben wird, dort besonders von Seite 5, Zeile 9 bis Seite 6, Zeile 24. Der Anteil an Isobuten aus nachwachsenden Quellen an dem gesamten eingesetzten Isobuten, gemessen gemäß ASTM D 6866, wie beschrieben in WO 2012/40859 A1, beträgt dabei mit Vorteil mindestens 1 Gew%, bevorzugt mindestens 2, besonders bevorzugt mindestens 10, ganz besonders bevorzugt mindestens 25 und insbesondere mindestens 50 Gew%. Der Anteil an Isobuten aus nachwachsenden Quellen kann bis zu 100 Gew% betragen, bevorzugt bis zu 95, besonders bevorzugt bis zu 90, ganz besonders bevorzugt bis zu 85 und insbesondere bis zu 80 Gew% betragen.

Das aus nachwachsenden Rohstoffen erhaltene Isobuten kann dadurch charakterisiert werden, dass das $^{14}C/^{12}C$-Isotopenverhältnis bestimmt wird, bevorzugt gemäß der ASTM D 6866 ("Determining the Biobased Content of Natural Range Materials Using Radiocarbon and Isotope Ratio Mass Spectrometry Analysis").

Gemäß dieser Testmethode wird das $^{14}C/^{12}C$-Isotopenverhältnis einer Probe gemessen und verglichen mit dem $^{14}C/^{12}C$-Isotopenverhältnis in einem standardisierten 100% biobasierten Material. Als Ergebnis wird der Gehalt an biobasiertem Anteil in dem Muster erhalten.

Die Anwendung von ASTM-D6866 zur Ableitung des "biobasierten Gehalts" basiert auf den gleichen Konzepten wie eine Radiokohlenstoffdatierung, aber ohne Verwendung der Altersgleichungen. Die Analyse wird durchgeführt, indem ein Verhältnis der Menge an Radiokohlenstoff ($^{14}C$) in einer unbekannten Probe bestimmt wird im Vergleich zu der eines modernen Referenzstandards. Diese Kennzahl wird in Prozent angegeben mit der Einheit "pMC" (percent modern carbon, Prozent moderner Kohlenstoff). Wenn es sich bei dem zu analysierenden Material um ein Gemisch aus heutigem Radiokohlenstoff handelt und fossilem Kohlenstoff (mit sehr geringem Radiokohlenstoffgehalt), so korreliert der erhaltene pMC-Wert direkt mit der Menge des in der Probe vorhandenen Biomassematerials.

"Biobasierte Materialien" sind organische Materialien, aus Kohlenstoff, der aus vor kurzem (auf einer menschlichen Zeitskala) aus der Atmosphäre mit Hilfe von Sonnenenergie (Photosynthese) fixiertem $CO_2$ stammt. An Land wird dieses $CO_2$ aufgenommen oder fixiert durch Pflanzen (z. B. landwirtschaftliche Nutzpflanzen oder forstwirtschaftliche Pflanzungen). In den Ozeanen wird das $CO_2$ durch Photosynthese von und in Bakterien oder Phytoplankton gebunden oder fixiert. Somit hat ein biobasiertes Material ein Isotopenverhältnis von $^{14}C/^{12}C$ größer als 0. Demgegenüber besitzt ein fossiles Material ein $^{14}C/^{12}C$-Isotopenverhältnis von etwa 0.

Ein kleiner Teil der Kohlenstoffatome des Kohlendioxids in der Atmosphäre ist das radioaktive Isotop $^{14}C$, das entsteht, wenn atmosphärischer Stickstoff von einem durch kosmische Strahlung erzeugten Neutron getroffen wird, wodurch dem Stickstoff ein Proton verloren geht und sich Kohlenstoff der Atommasse 14 ($^{14}C$) bildet, der dann sofort zu Kohlendioxid oxidiert wird. Ein kleiner, aber messbarer Anteil des atmosphärischen Kohlenstoffs liegt in Form von $^{14}CO_2$ vor. Atmosphärisches Kohlendioxid wird von grünen Pflanzen assimiliert, um während des als Photosynthese bekannten Prozesses organische Moleküle herzustellen. Praktisch alle Lebensformen auf der Erde sind auf die Produktion organischer Moleküle durch grüne Pflanzen angewiesen, um die chemische Energie zu erzeugen, die Wachstum und Fortpflanzung ermöglichen. Daher wird das $^{14}C$, das sich in der Atmosphäre bildet, schließlich Teil aller Lebensformen und ihrer biologischen Produkte, die Biomasse anreichern und Organismen, die sich von Biomasse mit $^{14}C$ ernähren. Im Gegensatz dazu weist Kohlenstoff aus fossilen Quellen, besonders Erdöl oder Kohle, nicht das charakteristische $^{14}C:^{12}C$-Verhältnis von erneuerbaren organischen Molekülen auf, die aus atmosphärischem Kohlendioxid gewonnen werden.

In einer bevorzugten Ausführungsform der vorliegenden Erfindung weist das in dem Polyisobuten eingesetzte Isobuten einen biobasierten Anteil, gemessen als $^{14}C$:$^{12}C$-Verhältnis ASTM-D6866 von mehr als 0%, bevorzugt mindestens 1%, besonders bevorzugt mindestens 5%, ganz besonders bevorzugt mindestens 10%, insbesondere mindestens 20% und speziell mindestens 25% auf.

Mit Vorteil kann dieser biobasierte Anteil mindestens 30%, bevorzugt mindestens 40, besonders bevorzugt mindestens 50, ganz besonders bevorzugt mindestens 66, insbesondere mindestens 75 und speziell mindestens 85% betragen.

Bei einem Anteil von mindestens 90%, bevorzugt mindestens 95%, besonders bevorzugt mindestens 98% und sogar 100% kann dies als deutlich überwiegend oder vollständig biobasiertes Isobuten bezeichnet werden.

Gemäß dieser Ausführungsform werden die Ressourcen geschont und das Produkt zumindest teilweise mit nachwachsenden Rohstoffen hergestellt.

In einer anderen Ausführungsform der vorliegenden Erfindung kann das in die Polymerisation eingesetzte Isobuten vollständig aus nachwachsenden Rohstoffen erhalten werden oder aus Abmischungen von Isobuten aus nachwachsenden und aus fossilen Quellen bestehen.

Diese Ausführungsform ist besonders dort und solange bevorzugt, wie Isobuten aus nachwachsenden Quellen nicht in industriell ausreichenden Mengen und ökonomisch verfügbar ist.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können, wenn auch weniger bevorzugt, auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

In einer Ausführungsform wird erfindungsgemäß ein Polyisobuten (A) eingesetzt, das mindestens eine, bevorzugt genau eine Doppelbindung aufweist.

Herstellungsbedingt handelt es sich bei Polyisobuten um ein Gemisch von Doppelbindungsisomeren, die die Eigenschaften und besonders die chemische Reaktivität des Polyisobuten bestimmen. Die wichtigsten sind Isomere mit alpha-Doppelbindungen

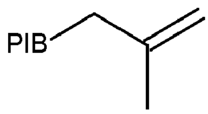

,

sowie Isomere mit beta-Doppelbindungen

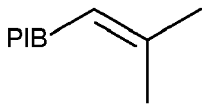

,

worin
der Rest PIB für den Rest des Polyisobuten ohne die gezeigte Substruktur steht.

Des weiteren sind noch weitere Isomere denkbar, wie sie beispielsweise in WO 2023/152258 gezeigt sind, die erfindungsgemäß jedoch lediglich eine untergeordnete Rolle spielen.

In einer bevorzugten erfindungsgemäßen Ausführungsform weist das Polyisobuten (A) ein zahlenmittleres Molekulargewicht Mn von 300 bis zu 10000 g/mol auf, bevorzugt von 500 bis 5000, besonders bevorzugt von 700 bis 2500 und einen Gehalt an alpha-Doppelbindungen von mindestens 70% auf, bevorzugt mindestens 75, besonders bevorzugt mindestens 80, ganz besonders bevorzugt mindestens 85 und insbesondere mindestens 90% auf. Ein derartiges Polyisobuten wird auch als niedermolekulares und hochreaktives Polyisobuten bezeichnet.

Der Gehalt an beta-Doppelbindungen kann bis zu 25%, bevorzugt bis zu 20, besonders bevorzugt bis zu 15, ganz besonders bevorzugt bis zu 10 und insbesondere bis zu 5% betragen.

Der Gehalt an anderen Isomeren als solchen mit alpha- oder beta-Doppelbindungen beträgt meist nicht mehr als

5%.

Der Gehalt an Isomeren wird mit Hilfe der $^1$H-NMR Spektroskopie bestimmt, wobei die Empfindlichkeit durch die Frequenz des Messgerätes festgelegt wird. Bevorzugt wird die $^1$H-NMR Spektroskopie mit 700 MHz bei 25 °C ausgeführt. Besonders bevorzugt werden die Isomere identifiziert nach der Methode wie beschrieben in Guo et al., Journal or Polymer Science, Part A: Polymer Chemistry, 2013, 51, 4200-4212.

In einer weiteren bevorzugten Ausführungsform weist das Polyisobuten (A) ein zahlenmittleres Molekulargewicht Mn von mehr als 10000 bis zu 100000 g/mol auf, bevorzugt von 11000 bis 90000, besonders bevorzugt von 12000 bis 80000, ganz besonders bevorzugt von 13000 bis 75000 und insbesondere von 14000 bis 70000 und einen Gehalt an alpha-Doppelbindungen von mindestens 20 bis 60% auf, bevorzugt mindestens 25 bis 45, besonders bevorzugt mindestens 30 bis 40% auf. Ein derartiges Polyisobuten wird auch als mittelmolekulares Polyisobuten bezeichnet.

Denkbar, wenn auch weniger bevorzugt, ist der Einsatz von hochmolekularem Polyisobuten mit einem zahlenmittleren Molekulargewicht von mehr als 100000 bis zu 5000000 g/mol, das in der Regel einen Gehalt an alpha-Doppelbindungen von nicht mehr als 50%, bevorzugt nicht mehr als 40% und besonders bevorzugt nicht mehr als 30% aufweist.

Das Molekulargewicht wird bestimmt durch Gelpermeationschromatographie mit Polystyrol als Standard.

In einer weiteren bevorzugten Ausführungsform handelt es sich bei den zugesetzten Verbindungen um Derivate (B) von Polyisobuten, wobei diese Polyisobutenderivate (B), enthaltend mindestens eine, bevorzugt mindestens zwei isolierte Doppelbindungen, erhältlich sind durch Umsetzung

- mindestens eines Polyisobutenyl-substituierten Bernsteinsäureanhydrids (PIBSA) mit
- mindestens einem ungesättigten Alkohol der Formel

$$HO\text{-}R^{15}\text{-}CR^{16}{=}CR^{17}R^{18}$$

und/oder

- mindestens einem einfach ungesättigten Amin der Formel

$$H_2N\text{-}R^{19}\text{-}CR^{20}{=}CR^{21}R^{22}$$

oder

$$HN(\text{-}R^{19}\text{-}CR^{20}{=}CR^{21}R^{22})_2.$$

In einer bevorzugten Ausführungsform werden für diese Polyisobutenyl-substituierten Bernsteinsäureanhydride hochreaktive Polyisobutene mit einem zahlenmittleren Molekulargewicht Mn von 300 bis zu 10000 g/mol auf, bevorzugt von 500 bis 5000, besonders bevorzugt von 700 bis 2500 eingesetzt.

In einer weiteren bevorzugten Ausführungsform kann auch ein Polyisobuten mit einem zahlenmittleren Molekulargewicht $M_n$ von 10.000 bis 100.000 eingesetzt werden, wie beschrieben in der WO 2017/216022.

In einer bevorzugten Ausführungsform weisen die einzusetzenden Polyisobutenyl-substituierten Bernsteinsäureanhydride (PIBSA) auch mehr als einfach substituierte Produkte auf.

Das Verhältnis der höher zu den einfach maleinierten Komponenten zueinander kann durch den "Bismaleinierungsgrad" (BMG) angegeben werden. Der BMG ist an sich bekannt (Siehe auch US 5,883,196) und kann nach folgender Formel bestimmt werden:

$$BMG = 100\% \times [(\text{wt-\%(BM PIBSA)}/(\text{wt-\%(BM PIBSA)}+\text{wt-\%(PIBSA)})]$$

wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

Berechnet wird der Bismaleinierungsgrad bevorzugt aus der Verseifungszahl gemäß DIN 53401: 1988-06 der Probe. Dabei muß die Probe gegebenenfalls mit einem geeigneten Lösungsmittel solubilisiert werden, bevorzugt in einem 2:1 Gemisch aus Toluol und Ethanol.

Dabei ist zu beachten, daß lediglich das Verhältnis der höher maleinierten Komponenten zu den einfach maleinierten Komponenten einbezogen wird, wohingegen im Reaktionsgemisch befindliches unumgesetztes Polyisobuten, beispielsweise solches, das keine reaktiven Doppelbindungen enthält, nicht in die Bestimmung des Bismaleinierungsgrades eingeht. Mithin kann das Reaktionsgemisch auch noch unumgesetztes Polyisobuten enthalten, was meist

dem Anteil im eingesetzten Polyisobuten entspricht, der keine reaktiven Doppelbindungen enthält, wohingegen der reaktive Doppelbindungen enthaltende Anteil im Polyisobuten bevorzugt vollständig oder nahezu vollständig abreagiert.

In einer bevorzugten Ausführungsform weisen die PIBSA einen Bismaleinierungsgrad von mindestens 5%, bevorzugt mindestens 8%, besonders bevorzugt mindestens 10% auf.

Mit weiterem Vorteil können solche Umsetzungsprodukte von Polyisobuten mit einem Bismaleinierungsgrad von mindestens 12%, bevorzugt mindestens 15%, besonders bevorzugt mindestens 20% eingesetzt werden.

Der Bismaleinierungsgrad kann bis zu 60% betragen, bevorzugt bis zu 55%, besonders bevorzugt bis zu 50%, insbesondere bis zu 45% und speziell bis zu 40%. Bei Wahl geeigneter Reaktionsbedingungen, besonders einem hohen Überschuß an Maleinsäureanhydrid, kann der Bismaleinierungsgrad bis auf bis zu 80% und sogar bis zu 100% gesteigert werden.

Die besten Ergebnisse werden erzielt bei einem Bismaleinierungsgrad von 10 bis 50%, bevorzugt 12 bis 45% und besonders bevorzugt 15 bis 40%.

In einer erfindungsgemäßen Ausführungsform ist es möglich, zur Herstellung der Polyisobutenderivate (B) Polyisobutenylbernsteinsäureanhydrid mit einem ein- oder mehrfach, bevorzugt einfach ungesättigten Alkohol der Formel

$$HO-R^{15}-CR^{16}=CR^{17}R^{18}$$

umzusetzen,
worin

$R^{15}$ ein zweibindiger optional mit Heteroatomen unterbrochener und/oder substituierter organischer Rest, bevorzugt ein optional mit Heteroatomen unterbrochener und/oder substituierter aliphatischer organischer Rest und besonders bevorzugt ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere Methylen ist, und

$R^{16}$, $R^{17}$ und $R^{18}$ unabhängig voneinander Wasserstoff oder $C_1$- bis $C_6$-Alkyl, bevorzugt Wasserstoff oder $C_1$- bis $C_4$-Alkyl, besonders bevorzugt Wasserstoff oder Methyl, Ethyl, n-Propyl, iso-Propyl, n-Butyl oder tert-Butyl, ganz besonders bevorzugt Wasserstoff oder Methyl, Ethyl oder n-Butyl.

Bevorzugte ungesättigte Alkohole sind Allylalkohol, Methallylalkohol, But-2-en-1-ol, But-3-en-1-ol, 3-Methylbut-2-en-1-ol, 3-Methylbut-3-en-1-ol, 4-Hydroxybutyl vinylether, 2-Hydroxyethyl(meth)acrylat, 2-Hydroxypropyl(meth) acrylat, 4-Hydroxypropyl(meth)acrylat, 4-Hydroxybutyl(meth)acrylat, 6-Hydroxyhexyl(meth)acrylat, Trimethylolpropan di(meth)acrylat, Pentaerythit tri(meth)acrylat, Geraniol, Farnesol und Linalool, besonders Allylalkohol.

Idealisiert umfassen diese Umsetzungsprodukte

- ausgehend von einem monomaleinierten PIBSA mindestens eine der folgenden Verbindungen

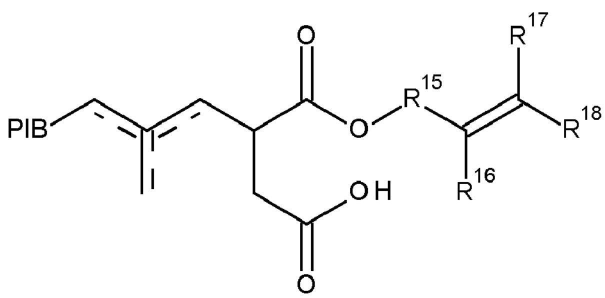

oder

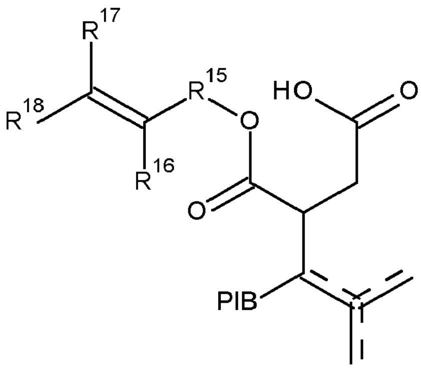

- ausgehend von bismaleiniertem PIBSA

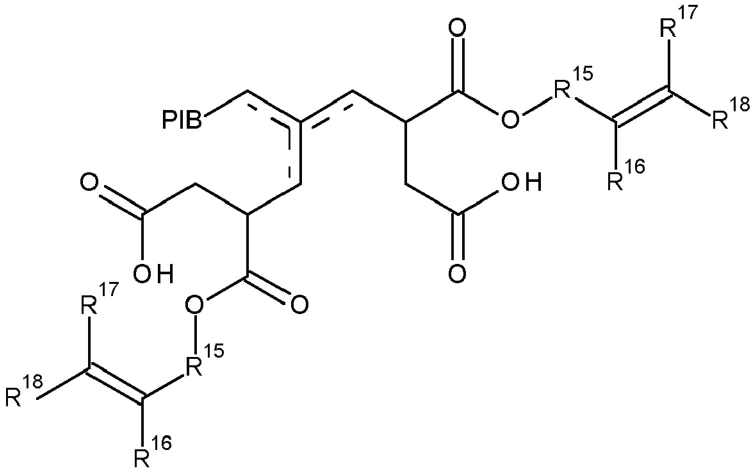

oder

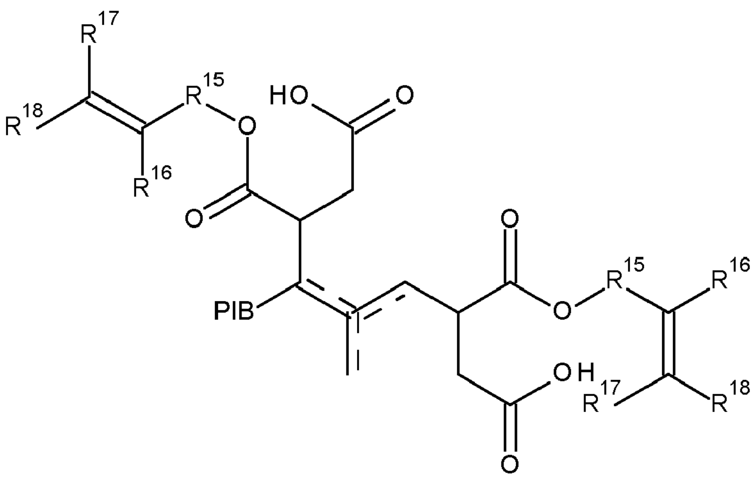

worin

PIB, $R^{15}$, $R^{16}$, $R^{17}$ und $R^{18}$ die jeweils oben angeführte Bedeutung aufweisen und die miteinander verbundenen durchbrochenen Bindungssysteme für jeweils eine Doppelbindung an einer der Bindungen stehen, sowie die jeweiligen Isomere, in denen der Alkohol

$$HO\text{-}R^{15}\text{-}CR^{16}\text{=}CR^{17}R^{18}$$

mit der anderen Carboxylgruppe der Bernsteinsäuresubstruktur verbunden ist.

Denkbar sind auch solche Verbindungen, in denen beide Carboxylgruppe der Bernsteinsäuresubstruktur mit Alkoholen der Formel HO-$R^{15}$-$CR^{16}$=$CR^{17}R^{18}$ verbunden sind.

In einer weiteren bevorzugten Ausführungsform zur Herstellung der Polyisobutenderivate (B) wird Polyisobutenylbernsteinsäureanhydrid mit einem ein- oder mehrfach, bevorzugt einfach ungesättigten Amin umgesetzt werden. Dabei kann es sich um primäre oder sekundäre Amine handeln.

Bevorzugte ungesättigte Amine weisen die Formel

$$H_2N\text{-}R^{19}\text{-}CR^{20}\text{=}CR^{21}R^{22}$$

oder

$$HN(\text{-}R^{19}\text{-}CR^{20}\text{=}CR^{21}R^{22})_2$$

auf,
worin

$R^{19}$ ein zweibindiger Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen und 1,6-Hexylen, insbesondere Methylen ist, und
$R^{20}$, $R^{21}$ und $R^{22}$ unabhängig voneinander Wasserstoff oder $C_1$- bis $C_6$-Alkyl, bevorzugt Wasserstoff oder $C_1$- bis $C_4$-Alkyl, besonders bevorzugt Wasserstoff oder Methyl, Ethyl, n-Propyl, iso-Propyl, n-Butyl oder tert-Butyl, ganz besonders bevorzugt Wasserstoff oder Methyl, Ethyl oder n-Butyl
bedeuten.

Bevorzugte ungesättigte Amine sind Allylamin, Methallylamin und Diallylamin. Idealisiert umfassen diese Umsetzungsprodukte des Amins

$$H_2N\text{-}R^{19}\text{-}CR^{20}\text{=}CR^{21}R^{22}$$

- ausgehend von einem monomaleinierten PIBSA mindestens eine der folgenden Verbindungen

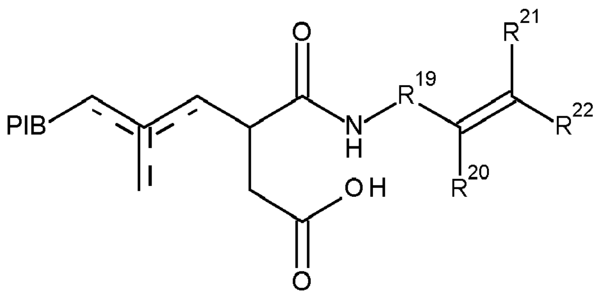

oder

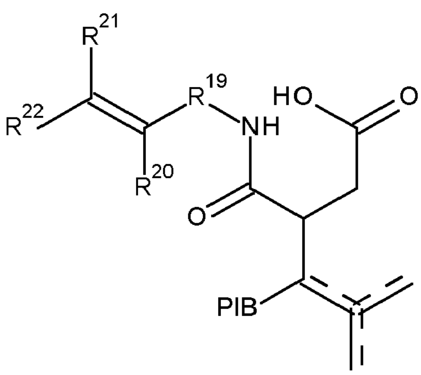

- ausgehend von bismaleiniertem PIBSA

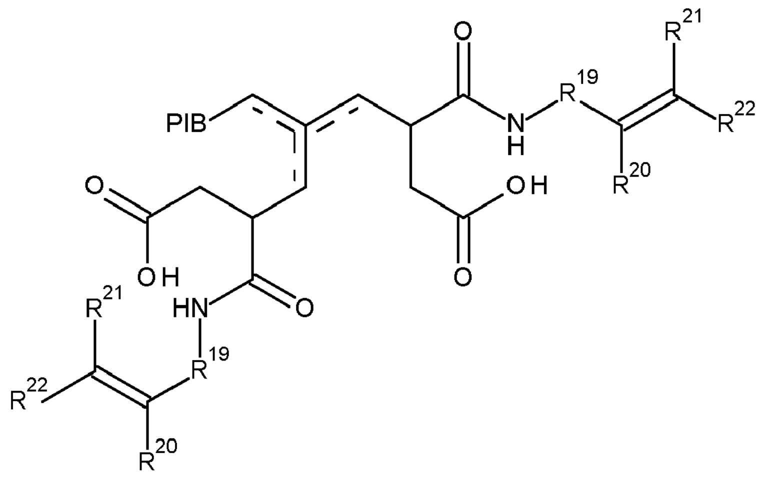

oder

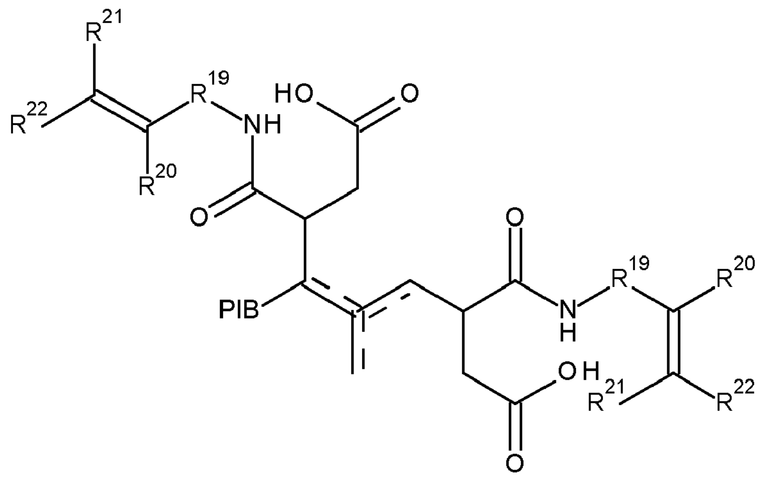

worin

PIB, $R^{19}$, $R^{20}$, $R^{21}$ und $R^{22}$ die jeweils oben angeführte Bedeutung aufweisen und
die miteinander verbundenen durchbrochenen Bindungssysteme für jeweils eine Doppelbindung an einer der Bindungen stehen,
sowie die jeweiligen Isomere, in denen das Amin

$$H_2N\text{-}R^{19}\text{-}CR^{20}=CR^{21}R^{22}$$

mit der anderen Carboxylgruppe der Bernsteinsäuresubstruktur verbunden ist.

Denkbar sind auch solche Verbindungen, in denen beide Carboxylgruppe der Bernsteinsäuresubstruktur mit Aminen der Formel $H_2N\text{-}R^{19}\text{-}CR^{20}=CR^{21}R^{22}$ verbunden sind.

Idealisiert umfassen diese Umsetzungsprodukte des Amins

$$HN\text{-}(\text{-}R^{19}\text{-}CR^{20}=CR^{21}R^{22})_2$$

- ausgehend von einem monomaleinierten PIBSA mindestens eine der folgenden Verbindungen

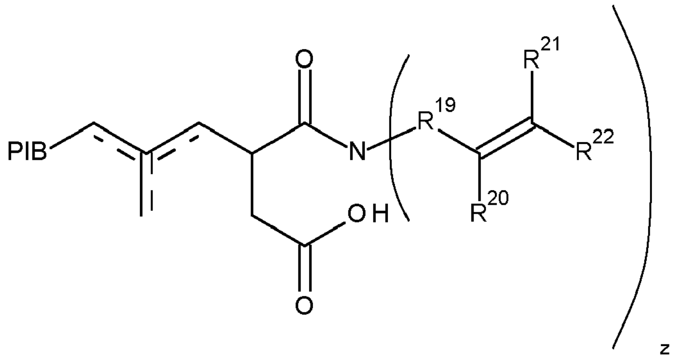

oder

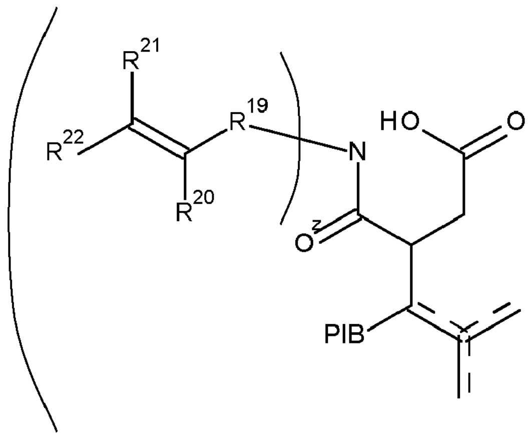

- ausgehend von bismaleiniertem PIBSA

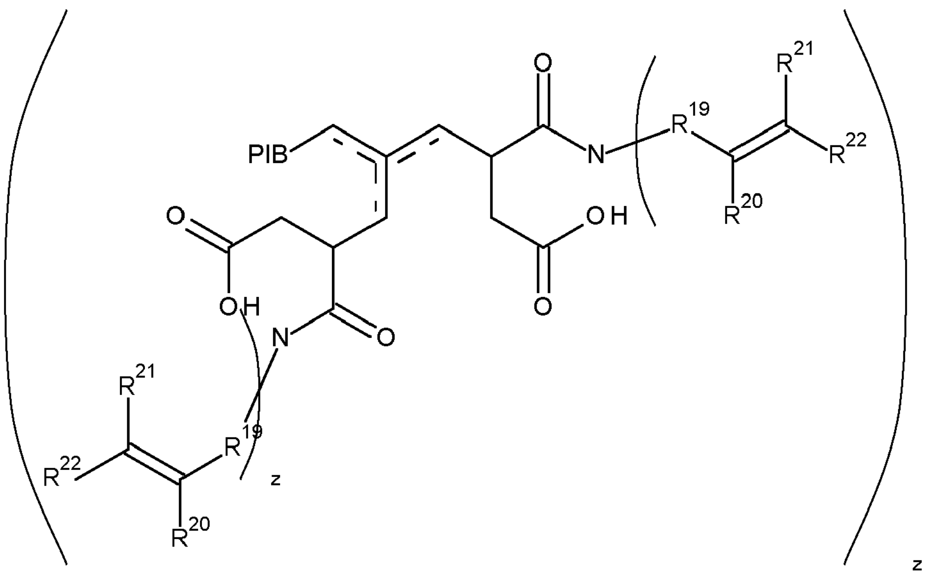

oder

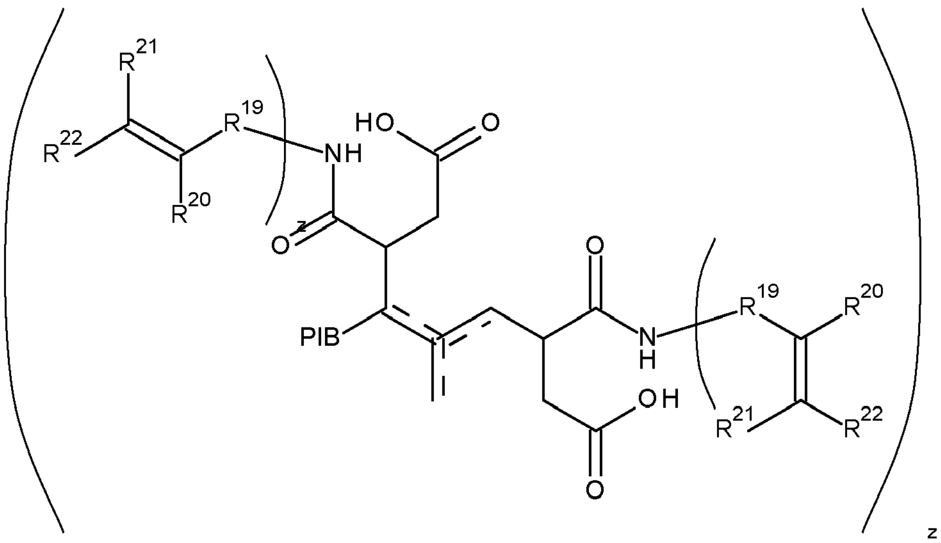

worin

PIB, $R^{19}$, $R^{20}$, $R^{21}$ und $R^{22}$ die jeweils oben angeführte Bedeutung aufweisen, z für 2 und
die miteinander verbundenen durchbrochenen Bindungssysteme für jeweils eine Doppelbindung an einer der Bindungen stehen,
sowie die jeweiligen Isomere, in denen das Amin

$$HN\text{-}(\text{-}R^{19}\text{-}CR^{20}{=}CR^{21}R^{22})_2$$

mit der anderen Carboxylgruppe der Bernsteinsäuresubstruktur verbunden ist.

Denkbar sind auch solche Verbindungen, in denen beide Carboxylgruppe der Bernsteinsäuresubstruktur mit Aminen der Formel $HN\text{-}(\text{-}R^{19}\text{-}CR^{20}{=}CR^{21}R^{22})_2$ verbunden sind.

Die erfindungsgemäßen Polyisobutene (A) oder Polyisobutenderivate (B) werden der Kautschukmischung in der Regel in Mengen von 2 bis 20, bevorzugt 4 bis 14, besonders bevorzugt 5 bis 10 phr zugegeben.

In der Regel werden die Verbindungen (A) und (B) der Kautschukmasse zusammen mit den anderen Bestandteilen zugegeben und in einem Kneter oder Extruder zur Einleitung der Vulkanisation erhitzt. Es kann auch vorteilhaft sein, zunächst die Kautschukmasse und die Füllmaterialien zusammen mit den Verbindungen (A) und (B) innig zu vermischen und später dann die anderen Bestandteilen, besonders Antioxidans, Aktivator und/oder Plastifizierer hinzuzugeben.

Demzufolge ist eine weitere Ausführungsform der vorliegenden Erfindung ein Verfahren zur Absenkung der Viskosität von Kautschukmassen in der Herstellung von Kautschuke-enthaltenden Reifen, in dem man

- mindestens einen Kautschuk mit
- Ruß und/oder Silikaten und
- mindestens einem Prozesshilfsmittel und/oder Additiv zur Verbesserung mindestens einer Gebrauchseigenschaft des Reifens

in einem Kneter und/oder Extruder vermischt,
wobei man der Kautschukmasse vor und/oder während der Verarbeitung mindestens ein Polyisobuten und/oder mindestens ein Polyisobuten (A) oder Polyisobutenderivat (B) wie oben beschrieben zusetzt.

Die Verfahren zur Vulkanisierung und Herstellung von Kautschukmassen sind an sich bekannt und sind auf den Einsatz der Verbindungen (A) und (B) übertragbar.

Es stellt einen Vorteil der Verbindungen (A) und (B) dar, dass sie eine vorteilhafte Wirkung auf die Verbesserung mindestens einer der folgenden Eigenschaften

- Dispersionskoeffizient
- Teilchengröße
- Nasshaftung
- Abriebsfestigkeit
- Rollwiderstand

von Kautschuke-enthaltenden Reifen haben.

Die Verbindungen (A) sind besonders geeignet zur Verbesserung der Dispergierung der Füllstoffe, besonders von Silika in den Kautschukmassen.

Ferner zeigen sie einen besonderen Vorteil zur Verringerung des Rollwiderstandes.

Während der Herstellung der Kautschukmassen zeigen die Verbindungen (A) weiterhin den Vorteil, dass sie die Viskosität der Massen während der Verarbeitung deutlich absenken.

Die Verbindungen (B) sind besonders geeignet zur Verbesserung der Dispergierung und/oder Verringerung der Partikelgröße der Füllstoffe, besonders von Silika in den Kautschukmassen.

Ferner zeigen die Verbindungen (B) einen Vorteil hinsichtlich Nassgriff bei niedrigen Temperaturen (-10 °C) und/oder Rollwiderstand und/oder Abriebsbeständigkeit der diese enthaltenden Reifen. Bevorzugt verbessern die Verbindungen (B) mindestens zwei dieser drei Eigenschaften. Es stellt einen besonderen Vorteil dar, dass die Verbindungen (B) gleichzeitig einen Vorteil hinsichtlich Nassgriff bei niedrigen Temperaturen (-10 °C) und Rollwiderstand und Abriebsbeständigkeit der Reifen aufweisen.

Ferner zeigen die Verbindungen (B) weiterhin den Vorteil, dass sie während der Herstellung der Kautschukmassen deren Viskosität während der Verarbeitung deutlich absenken.

Durch die Erhöhung der Abriebsfestigkeit der Reifen wird die Freisetzung von Mikroplastik aus dem Abrieb von Reifen beim Betrieb von Kraftfahrzeugen verringert.

Des weiteren sind die Verbindungen (A) und (B), besonders (B) geeignet, während der Herstellung von Kautschukmassen für Reifen freigesetzte Alkohole, besonders Ethanol zu binden, so dass während der Herstellung geringere Emissionen freigesetzt werden.

Ohne an eine Theorie gebunden sein zu wollen wird vermutet, dass solche während der Herstellung von Kautschukmassen für Reifen freigesetzten Alkohole ROH, besonders Ethanol, mit bis dahin unreagierten Bernsteinsäureanhydrid- oder Carbonsäuregruppen reagieren und als Carbonsäureester gebunden werden. Es ist auch denkbar, dass der freigesetzte Alkohol ROH, besonders Ethanol, in einer Umesterung den Alkohol $HO-R^{15}-CR^{16}=CR^{17}R^{18}$ bzw. in einer Umamidierung das Amin $H_2N-R^{19}-CR^{20}=CR^{21}R^{22}$ oder $HN(-R^{19}-CR^{20}=CR^{21}R^{22})_2$ aus der bestehenden Carbonsäureester- bzw. -amidbindung verdrängt.

Von den oben angeführten Strukturen ausgehend von der Umsetzung mit dem Alkohol $HO-R^{15}-CR^{16}=CR^{17}R^{18}$ würden sich damit folgende Umsetzungsprodukte bilden:

- ausgehend von einem monomaleinierten PIBSA mindestens eine der folgenden Verbindungen

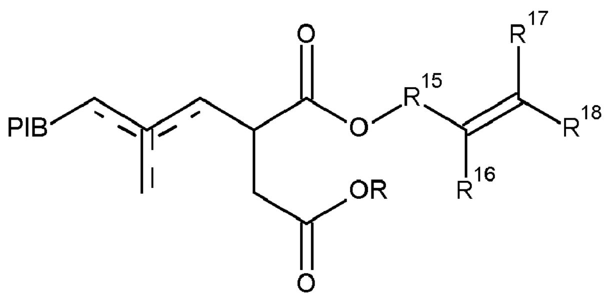

oder

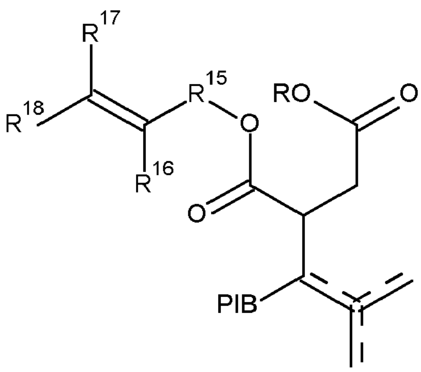

- ausgehend von bismaleiniertem PIBSA

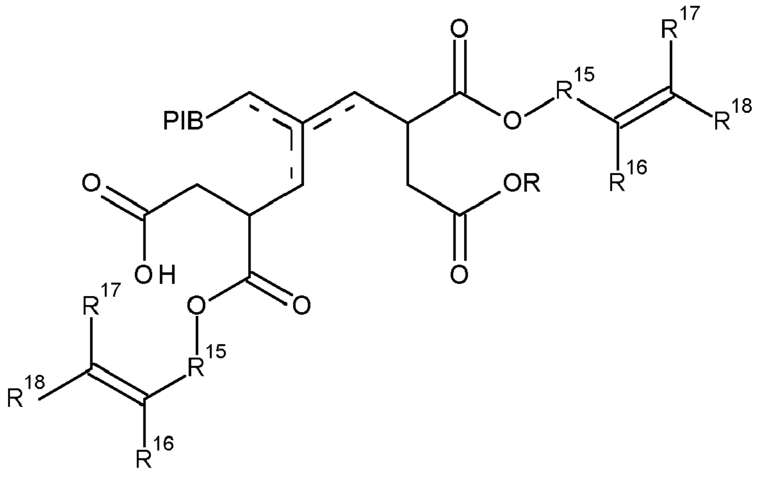

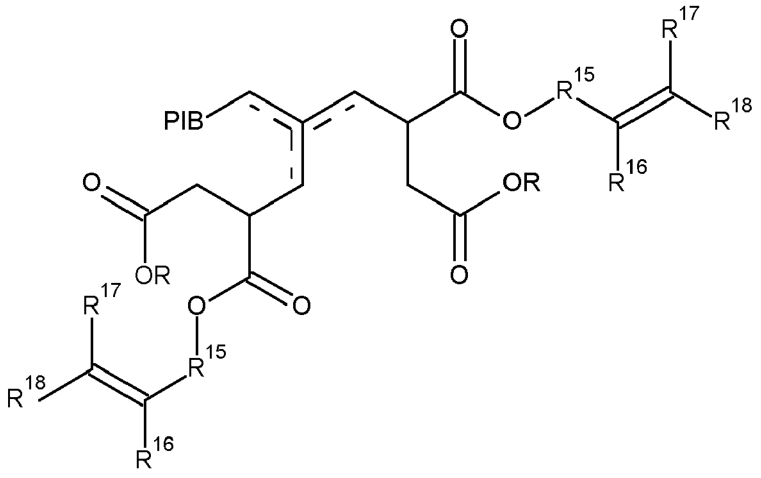

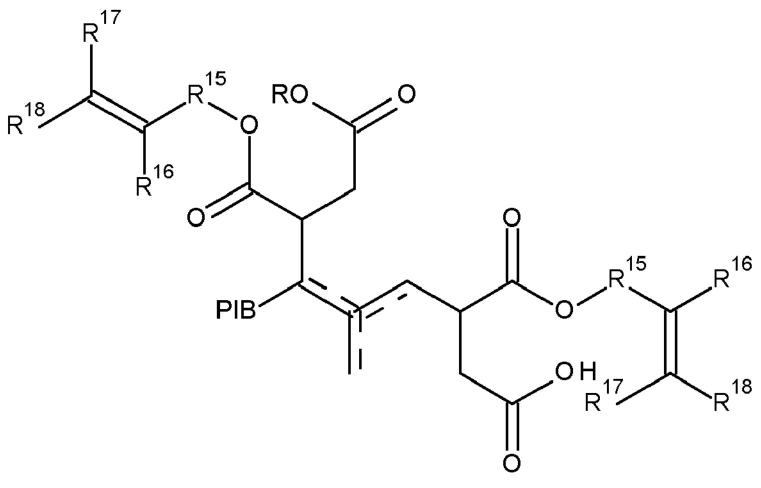

oder

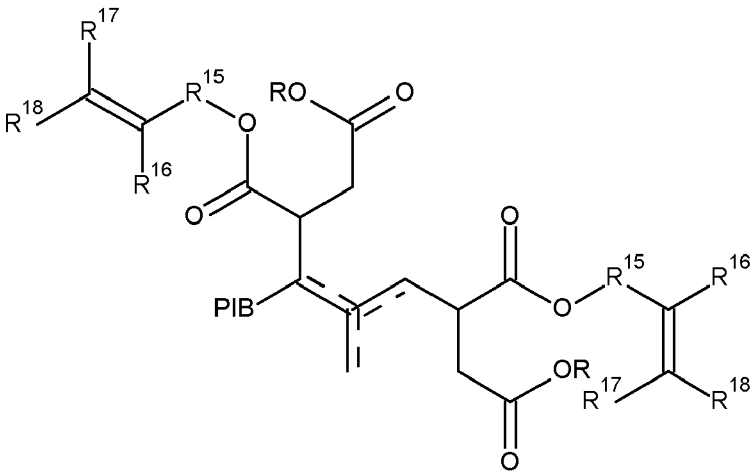

worin

PIB, $R^{15}$, $R^{16}$, $R^{17}$ und $R^{18}$ die jeweils oben angeführte Bedeutung aufweisen,
R für den Rest des freigesetzten Alkohols, besonders Ethyl und
die miteinander verbundenen durchbrochenen Bindungssysteme für jeweils eine Doppelbindung an einer der Bindungen stehen,
sowie die jeweiligen Isomere, in denen der Alkohol

$$HO\text{-}R^{15}\text{-}CR^{16}{=}CR^{17}R^{18}$$

mit der anderen Carboxylgruppe der Bernsteinsäuresubstruktur verbunden ist.

Von den oben angeführten Strukturen ausgehend von der Umsetzung mit dem monosubstituierten Amin $H_2N\text{-}R^{19}\text{-}CR^{20}{=}CR^{21}R^{22}$ würden sich damit folgende Umsetzungsprodukte bilden:

- ausgehend von einem monomaleinierten PIBSA mindestens eine der folgenden Verbindungen

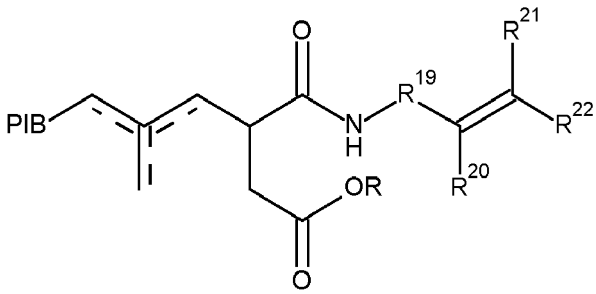

oder

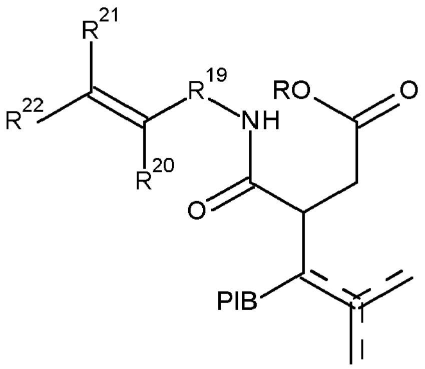

- ausgehend von bismaleiniertem PIBSA

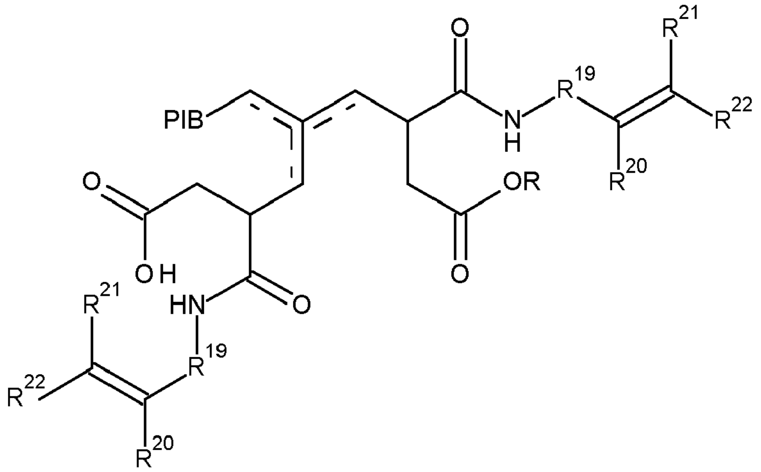

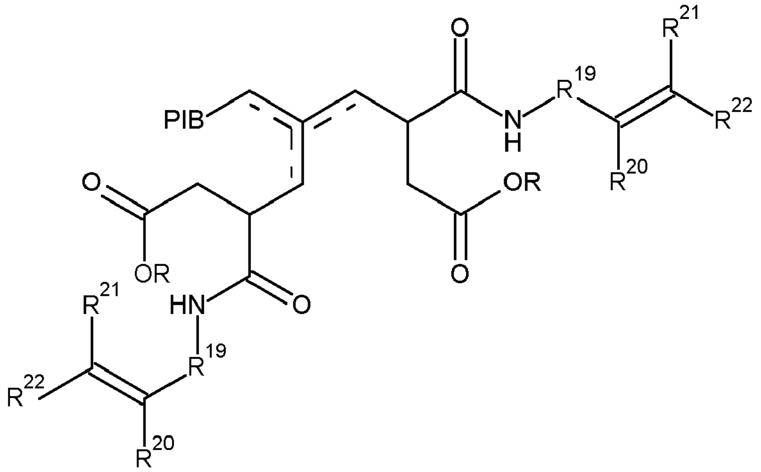

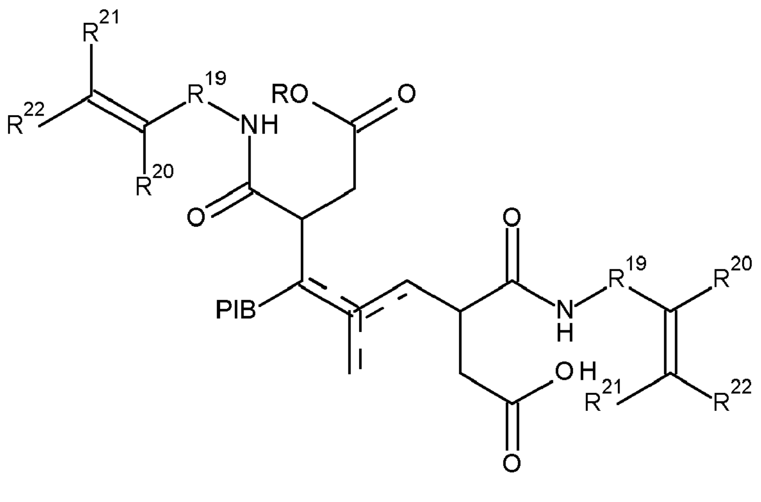

oder

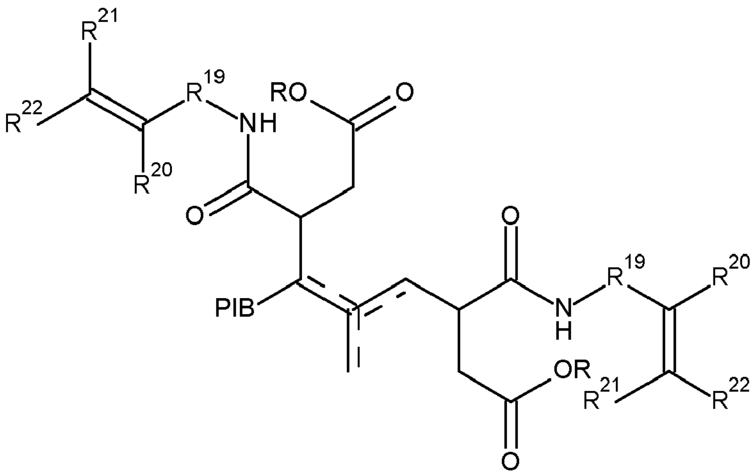

worin

PIB, $R^{19}$, $R^{20}$, $R^{21}$ und $R^{22}$ die jeweils oben angeführte Bedeutung aufweisen,
R für den Rest des freigesetzten Alkohols, besonders Ethyl und
die miteinander verbundenen durchbrochenen Bindungssysteme für jeweils eine Doppelbindung an einer der Bindungen stehen,
sowie die jeweiligen Isomere, in denen das Amin

$$H_2N\text{-}R^{19}\text{-}CR^{20}\text{=}CR^{21}R^{22}$$

mit der anderen Carboxylgruppe der Bernsteinsäuresubstruktur verbunden ist.

Von den oben angeführten Strukturen ausgehend von der Umsetzung mit dem disubstituierten Amin HN-(-$R^{19}$-$CR^{20}$=$CR^{21}R^{22}$)$_2$ würden sich damit folgende Umsetzungsprodukte bilden:

- ausgehend von einem monomaleinierten PIBSA mindestens eine der folgenden Verbindungen

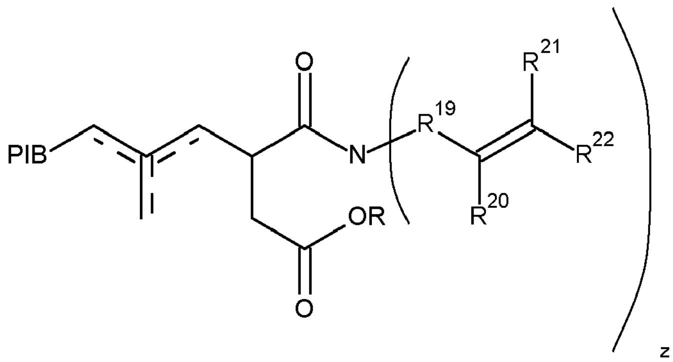

oder

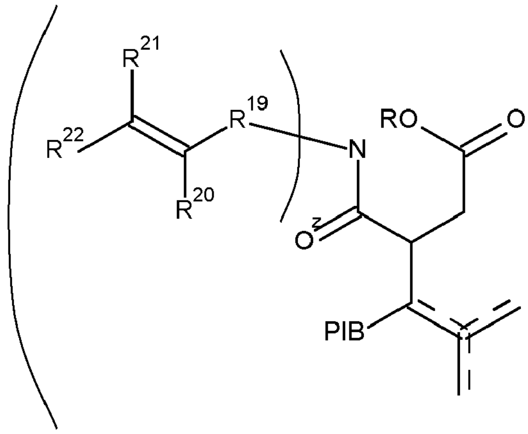

- ausgehend von bismaleiniertem PIBSA

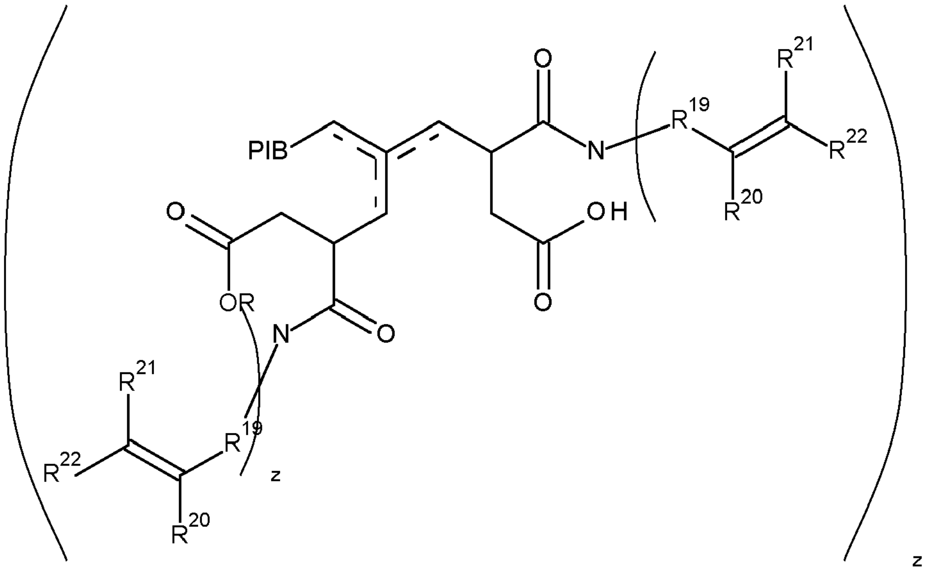

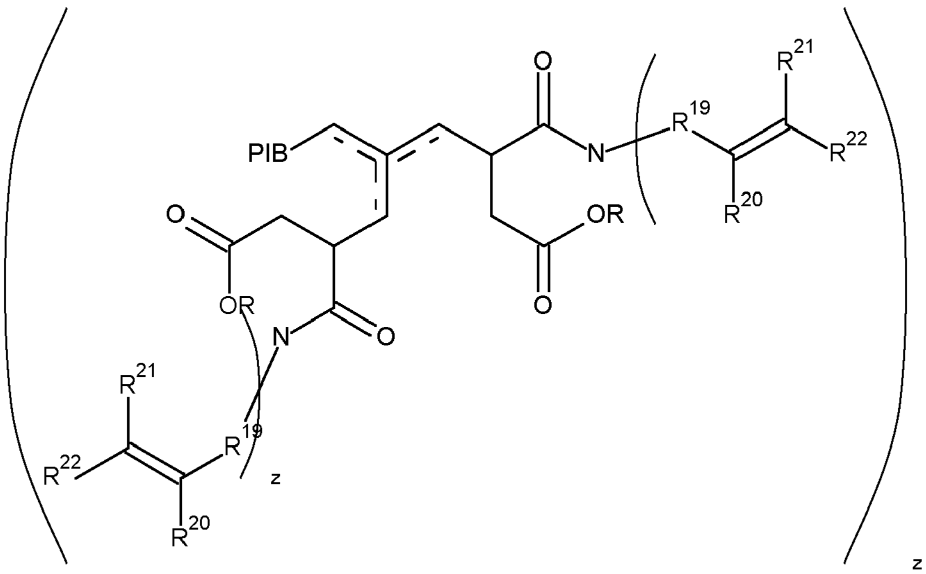

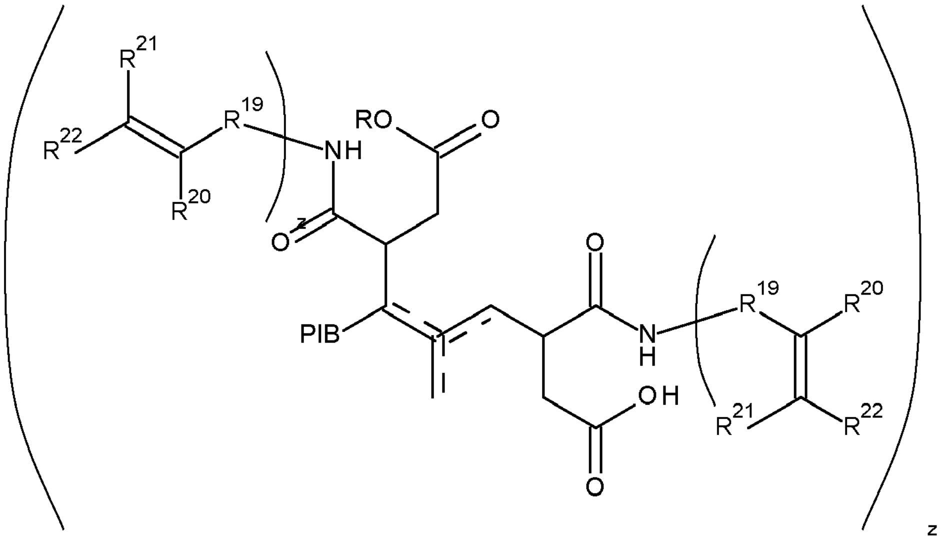

oder

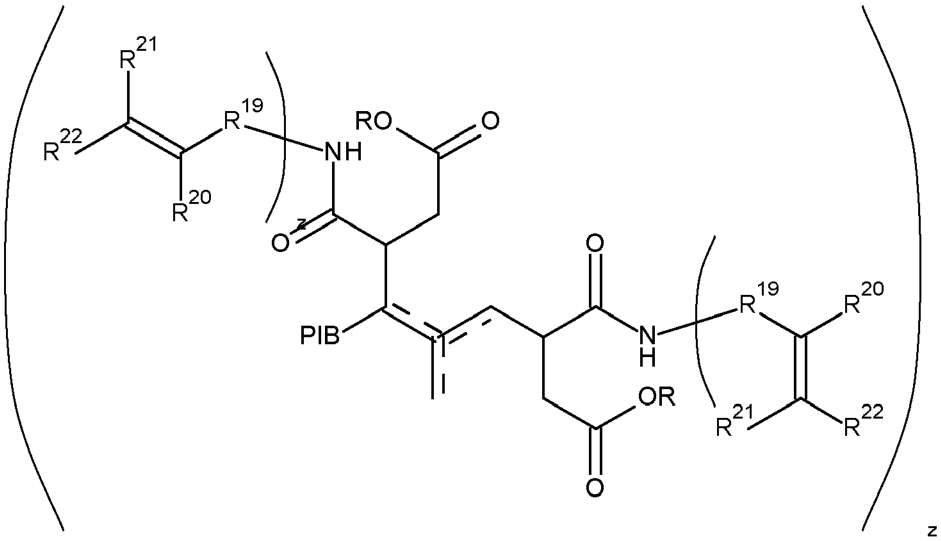

worin

PIB, $R^{19}$, $R^{20}$, $R^{21}$ und $R^{22}$ die jeweils oben angeführte Bedeutung aufweisen,
R für den Rest des freigesetzten Alkohols, besonders Ethyl
z für 2 und
die miteinander verbundenen durchbrochenen Bindungssysteme für jeweils eine Doppelbindung an einer der Bindungen stehen,
sowie die jeweiligen Isomere, in denen das Amin

$$HN\text{-}(\text{-}R^{19}\text{-}CR^{20}{=}CR^{21}R^{22})_2$$

mit der anderen Carboxylgruppe der Bernsteinsäuresubstruktur verbunden ist.

Durch Umesterung bzw. Umamidierung können sich ferner zusätzlich Verbindungen bilden, in denen beide Carboxylgruppen der Bernsteinsäuresubstruktur mit dem Rest des Alkohols ROH verbunden ist.

Durch die Anwesenheit der ungesättigten Gruppen in diesen Strukturen sind auch die Estern mit dem Alkohol ROH, besonders Ethanol zur Verbesserung mindestens einer der folgenden Eigenschaften

- Dispersionskoeffizient

- Teilchengröße
- Nasshaftung
- Abriebsfestigkeit
- Rollwiderstand

von Kautschuke-enthaltenden Reifen
befähigt.

Es stellt einen weiteren Vorteil der vorliegenden Erfindung dar, dass die Verbindungen (A) und (B), besonders (B) in der Lage sind mit anderen Bestandteilen der Kautschukmassen zu reagieren, beispielsweise mit dem Kautschuk selbst und besonders mit dem Silan-Kopplungsmittel. Dadurch erhöhen sie die Kompatibilität der einzelnen Komponenten der Kautschukmassen miteinander.

Besonders vorteilhaft ist dabei das Umsetzungprodukt von mindestens eine Doppelbindung aufweisendem, hochreaktivem Polyisobuten (A) mit dem Silan-Kopplungsmittel. Dabei werden bevorzugt die folgenden Strukturen gebildet:

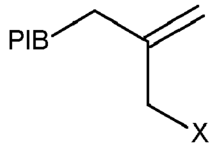

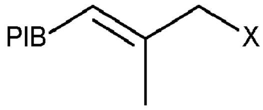

und/oder

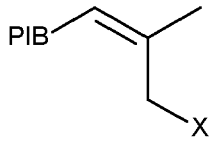

worin

der Rest PIB für den Rest des Polyisobuten ohne die gezeigte Substruktur steht,
X für $-(S)_x-R^{25}-Si(OR^{26})_3$,
x für 1, 2, 3 oder 4
$R^{25}$ ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere 1,3-Propylen ist, und $R^{26}$ für $C_1$- bis $C_6$-Alkyl, bevorzugt $C_1$- bis $C_4$-Alkyl, besonders bevorzugt Methyl, Ethyl, n-Propyl, iso-Propyl, n-Butyl oder tert-Butyl, ganz besonders bevorzugt Methyl, Ethyl oder n-Butyl, insbesondere Methyl oder Ethyl und speziell Methyl,
stehen.

Von den oben angeführten Strukturen ausgehend von der Umsetzung mit dem Alkohol $HO-R^{15}-CR^{16}=CR^{17}R^{18}$ würden sich damit folgende Umsetzungsprodukte bilden:

- ausgehend von einem monomaleinierten PIBSA mindestens eine der folgenden Verbindungen

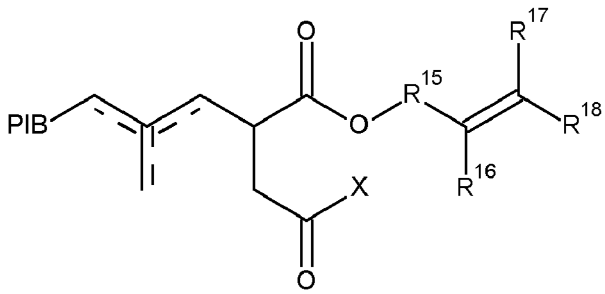

oder

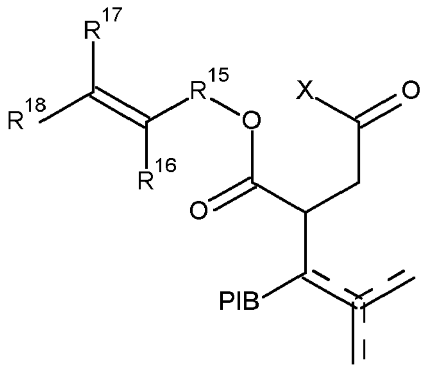

- ausgehend von bismaleiniertem PIBSA

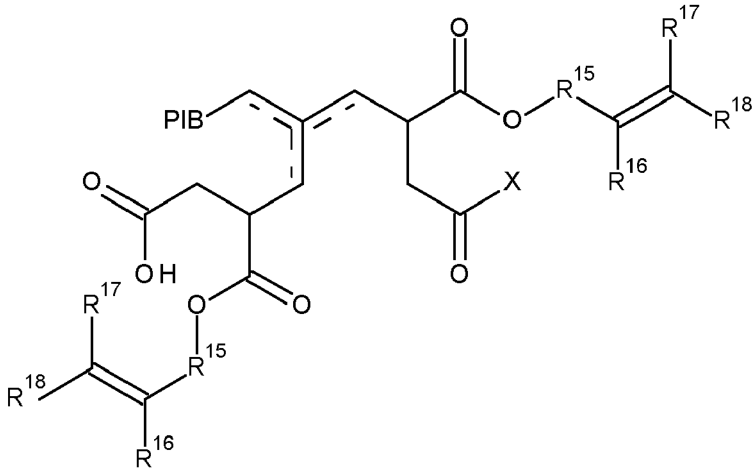

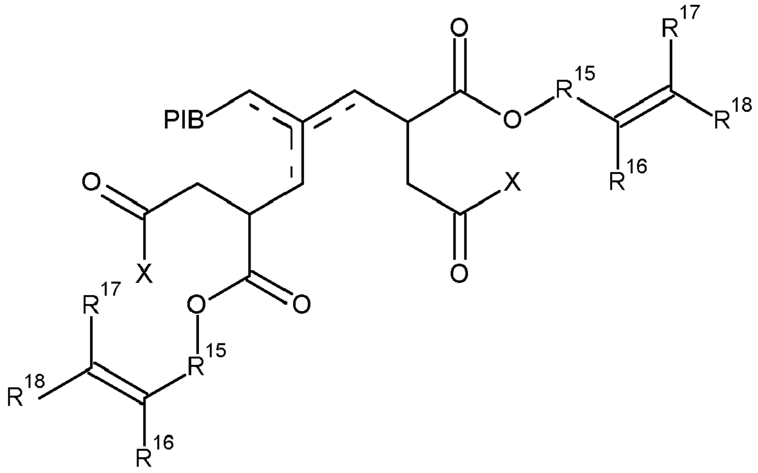

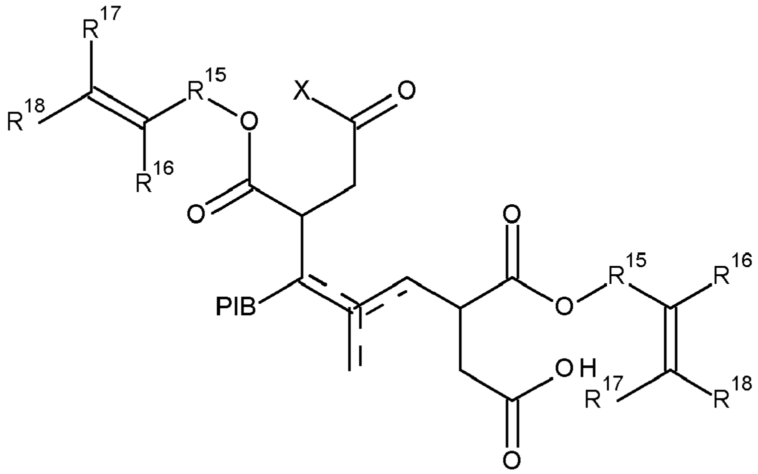

oder

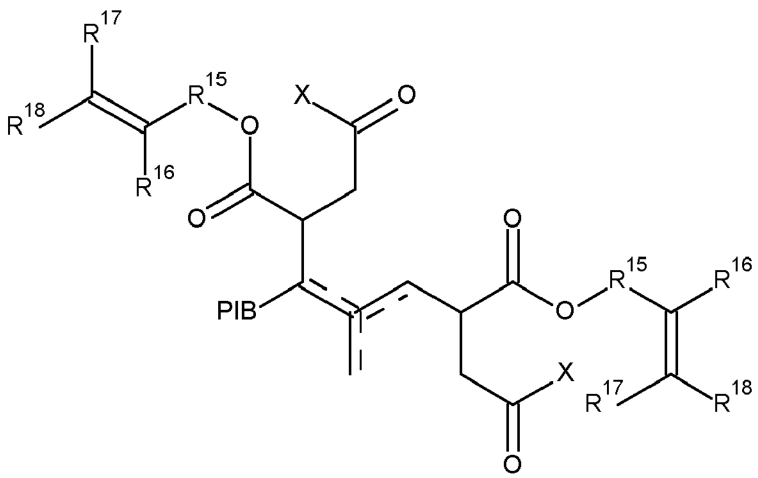

worin

PIB, $R^{15}$, $R^{16}$, $R^{17}$ und $R^{18}$ die jeweils oben angeführte Bedeutung aufweisen,
X für $-(S)_x-R^{25}-Si(OR^{26})_3$,
x für 1, 2, 3 oder 4
$R^{25}$ ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus

Methylen, 1,2-Ethylen, 1,2-Propylen, 1,3-Propylen, 1,4-Butylen, 5-oxa-1,5-pentylen und 1,6-Hexylen, insbesondere 1,3-Propylen ist,
$R^{26}$ für $C_1$- bis $C_6$-Alkyl, bevorzugt $C_1$- bis $C_4$-Alkyl, besonders bevorzugt Methyl, Ethyl, n-Propyl, iso-Propyl, n-Butyl oder tert-Butyl, ganz besonders bevorzugt Methyl, Ethyl oder n-Butyl, insbesondere Methyl oder Ethyl und speziell Methyl,und
die miteinander verbundenen durchbrochenen Bindungssysteme für jeweils eine Doppelbindung an einer der Bindungen stehen,
sowie die jeweiligen Isomere, in denen der Alkohol

$$HO\text{-}R^{15}\text{-}CR^{16}{=}CR^{17}R^{18}$$

mit der anderen Carboxylgruppe der Bernsteinsäuresubstruktur verbunden ist.

Von den oben angeführten Strukturen ausgehend von der Umsetzung mit dem monosubstituierten Amin $H_2N\text{-}R^{19}\text{-}CR^{20}{=}CR^{21}R^{22}$ würden sich damit folgende Umsetzungsprodukte bilden:

- ausgehend von einem monomaleinierten PIBSA mindestens eine der folgenden Verbindungen

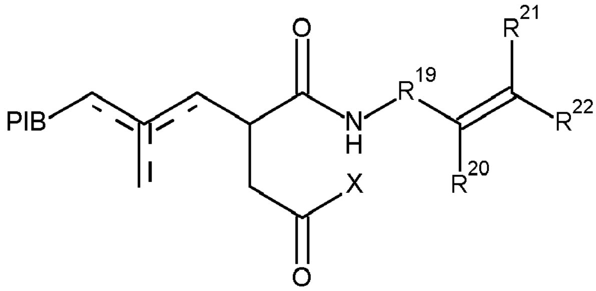

oder

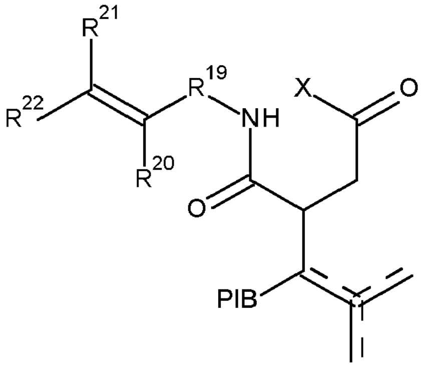

- ausgehend von bismaleiniertem PIBSA

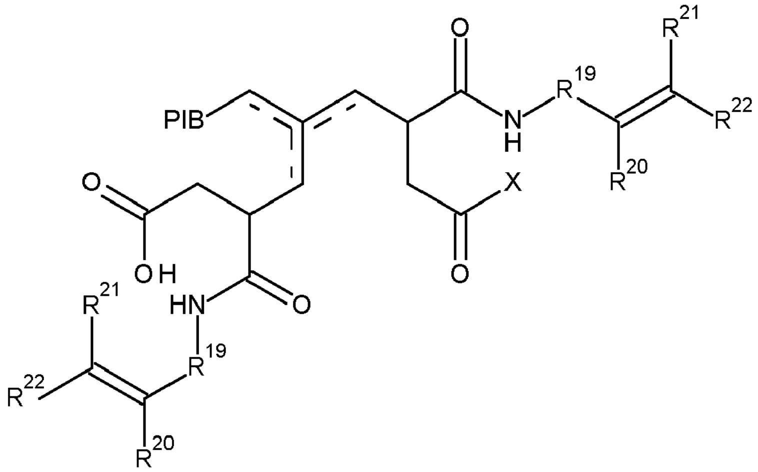

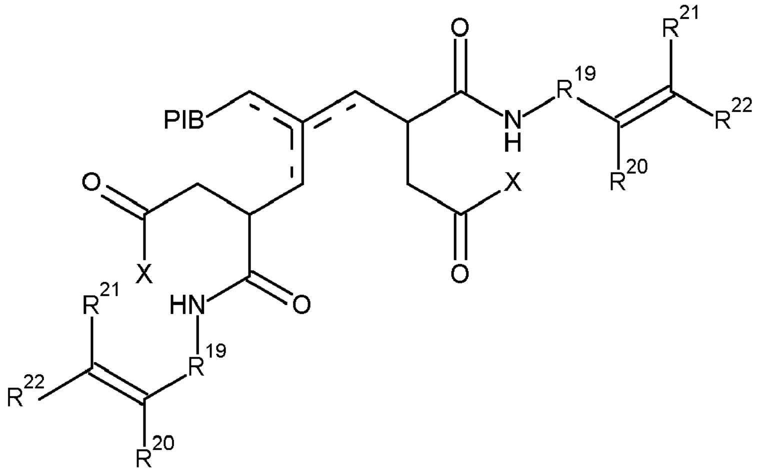

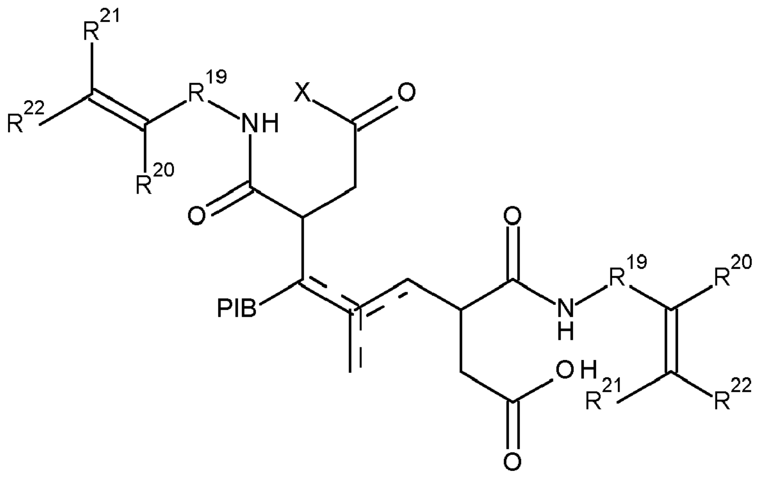

oder

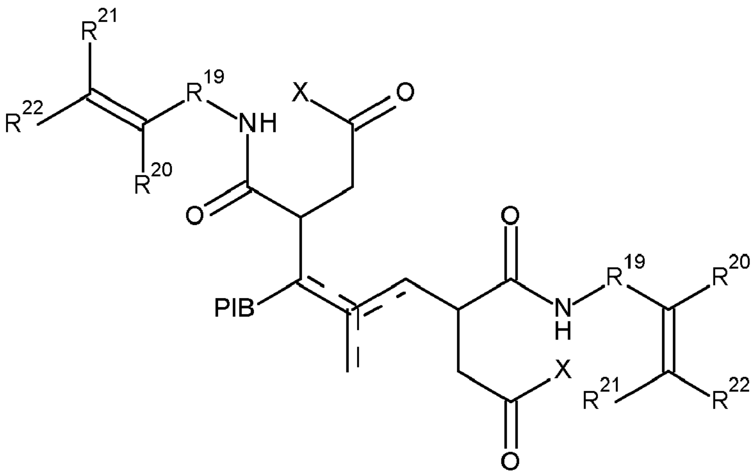

worin

PIB, $R^{19}$, $R^{20}$, $R^{21}$ und $R^{22}$ die jeweils oben angeführte Bedeutung aufweisen,
X für $-(S)_x-R^{25}-Si(OR^{26})_3$,
x für 1, 2, 3 oder 4
$R^{25}$ ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere 1,3-Propylen ist,
$R^{26}$ für $C_1$- bis $C_6$-Alkyl, bevorzugt $C_1$- bis $C_4$-Alkyl, besonders bevorzugt Methyl, Ethyl, n-Propyl, iso-Propyl, n-Butyl oder tert-Butyl, ganz besonders bevorzugt Methyl, Ethyl oder n-Butyl, insbesondere Methyl oder Ethyl und speziell Methyl, und
die miteinander verbundenen durchbrochenen Bindungssysteme für jeweils eine Doppelbindung an einer der Bindungen stehen,
sowie die jeweiligen Isomere, in denen das Amin

$$H_2N-R^{19}-CR^{20}=CR^{21}R^{22}$$

mit der anderen Carboxylgruppe der Bernsteinsäuresubstruktur verbunden ist.

Von den oben angeführten Strukturen ausgehend von der Umsetzung mit dem disubstituierten Amin $HN-(-R^{19}-CR^{20}=CR^{21}R^{22})_2$ würden sich damit folgende Umsetzungsprodukte bilden:

- ausgehend von einem monomaleinierten PIBSA mindestens eine der folgenden Verbindungen

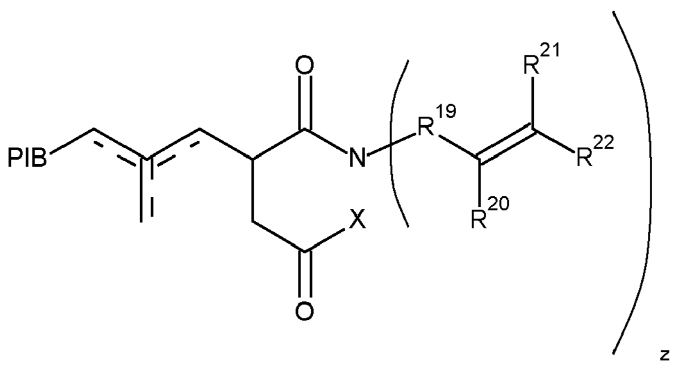

oder

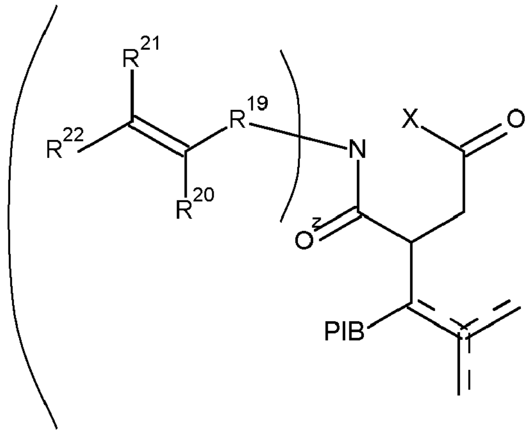

- ausgehend von bismaleiniertem PIBSA

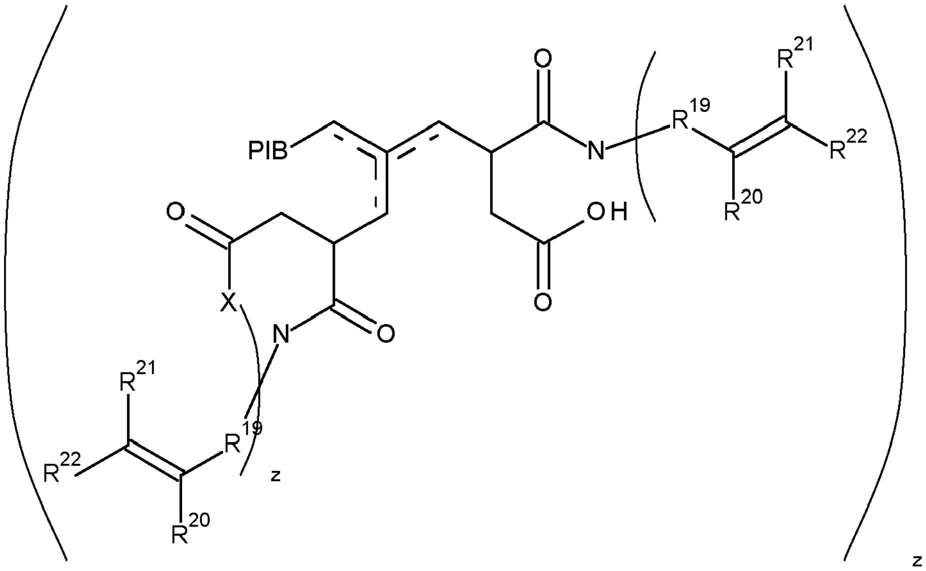

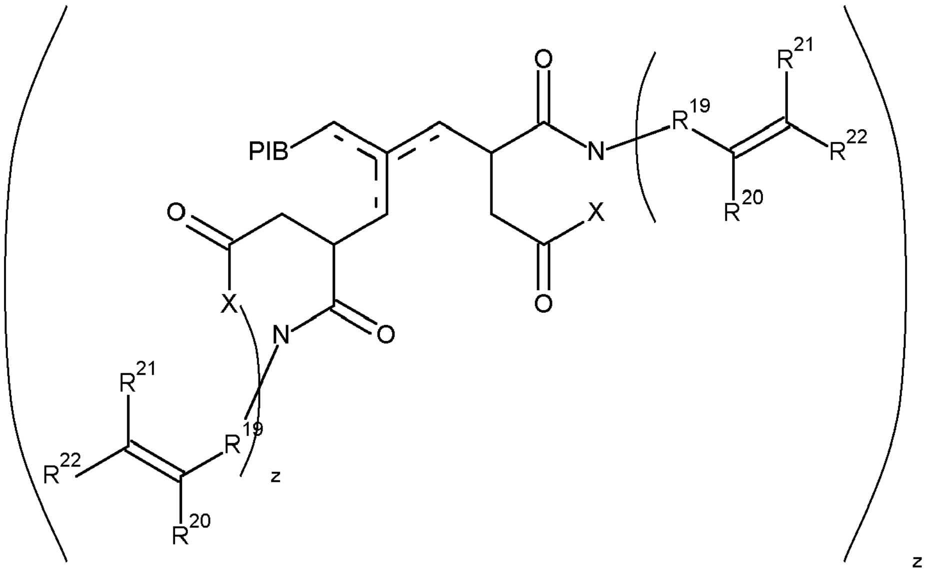

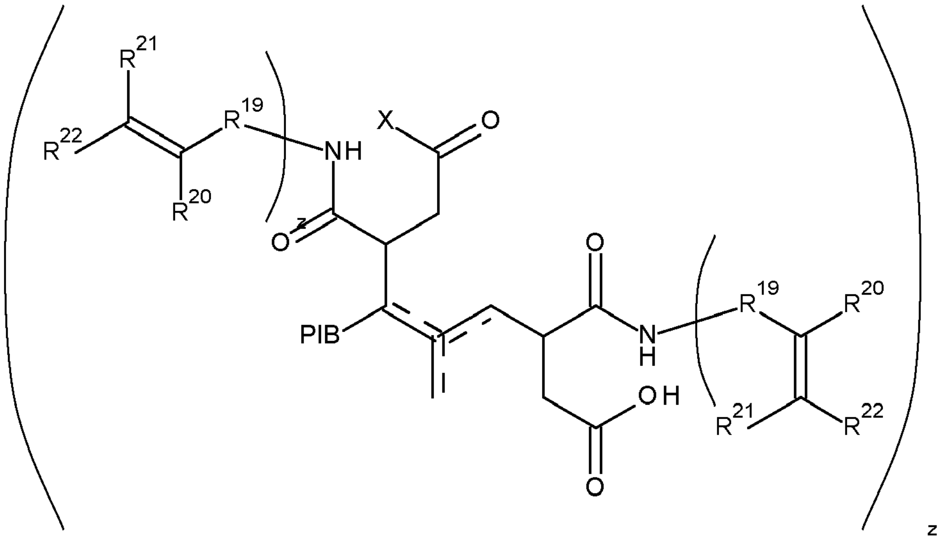

oder

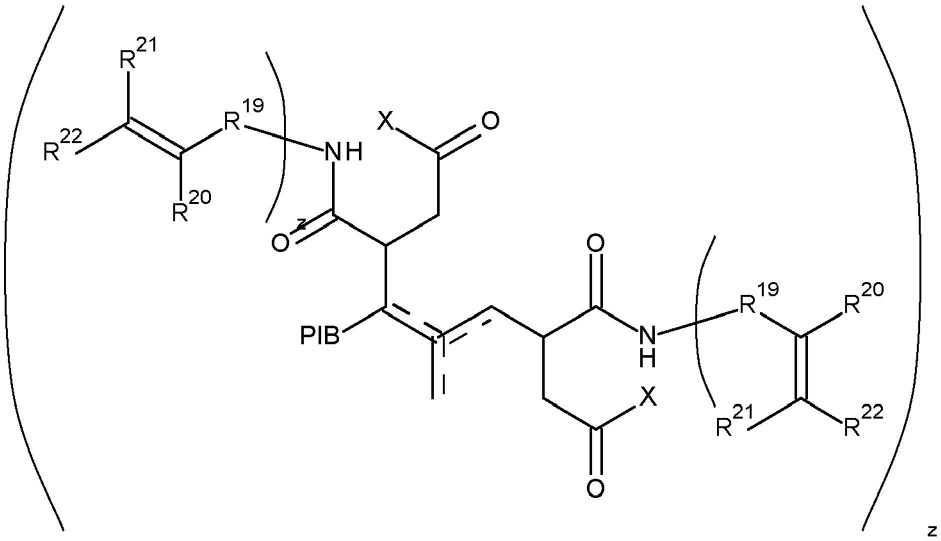

worin

PIB, $R^{19}$, $R^{20}$, $R^{21}$ und $R^{22}$ die jeweils oben angeführte Bedeutung aufweisen,
X für $-(S)_x-R^{25}-Si(OR^{26})_3$,
x für 1, 2, 3 oder 4
$R^{25}$ ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere 1,3-Propylen ist,
$R^{26}$ für $C_1$- bis $C_6$-Alkyl, bevorzugt $C_1$- bis $C_4$-Alkyl, besonders bevorzugt Methyl, Ethyl, n-Propyl, iso-Propyl, n-Butyl oder tert-Butyl, ganz besonders bevorzugt Methyl, Ethyl oder n-Butyl, insbesondere Methyl oder Ethyl und speziell Methyl,
z für 2 und
die miteinander verbundenen durchbrochenen Bindungssysteme für jeweils eine Doppelbindung an einer der Bindungen stehen,
sowie die jeweiligen Isomere, in denen das Amin

$$HN\text{-}(\text{-}R^{19}\text{-}CR^{20}{=}CR^{21}R^{22})_2$$

mit der anderen Carboxylgruppe der Bernsteinsäuresubstruktur verbunden ist.

Es ist ein Vorteil dieser Umsetzungsprodukte mit dem Silan-Kopplungsmittel, dass sie mit in den Kautschukmassen enthaltenen Silikaten unter Ausbildung von Si-O-Si-Bindungen reagieren können und somit die Einarbeitbarkeit und Kompatibilität der Silikate verbessern und zusätzlich zur Verbesserung mindestens einer der folgenden Eigenschaften

- Dispersionskoeffizient
- Teilchengröße
- Nasshaftung
- Abriebsfestigkeit
- Rollwiderstand

von Kautschuke-enthaltenden Reifen beitragen können.

Demzufolge sind diese Umsetzungsprodukte ein Gegenstand der vorliegenden Erfindung sowie Kautschukmassen, enthaltend diese Umsetzungsprodukte.

Ein weiterer Gegenstand sind Kautschukmassen, enthaltend

- mindestens einen Kautschuk, ausgewählt aus der Gruppe bestehend aus Isobuten-Isopren-Kautschuk, Styrol-Butadien-Kautschuk und Naturkautschuk sowie deren Mischungen,
- mindestens einen Füllstoff, ausgewählt aus der Gruppe bestehend aus Kalziumcarbonat, Tone, Glimmer, Kieselerde, Silikate, Talkum, Bentonit, Titandioxid, Aluminiumoxid, Zinkoxid und Ruß,
- mindestens einem Antioxidans, bevorzugt einem p-Phenylendiamin,
- mindestens einem Peroxid und/oder Polyamin als Härter und/oder Vernetzer,
- mindestens einem Aktivatoren für den Vulkanisierungsprozeß ausgewählt aus der Gruppe bestehend aus Aminen, Diaminen, Guanidinen, Thioharnstoffen, Thiatolen, Thiramen, Sulfenamiden, Sulfenimiden, Thiocarbamaten und Xanthaten,
- mindestens einem Silanvernetzer ausgewählt aus der Gruppe bestehend aus Bis(($C_1$-$C_4$)alkoxy($C_1$-$C_4$)alkylsilyl($C_1$-$C_4$)alkyl)polysulfide, (besonders Disulfide, Trisulfide oder Tetrasulfide), Bis(3-trimethoxysilylpropyl) polysulfid, Bis(3-triethoxysilylpropyl)polysulfid, Bis(3-triethoxysilylpropyl)tetrasulfid (TESPT) der Formel $[(C_2H_5O)_3Si(CH_2)_3S_2]_2$, und Bis(triethoxysilylpropyl)disulfid (TESPD) der Formel $[(C_2H_5O)_3Si(CH_2)_3S]_2$, und
- mindestens eine Doppelbindung aufweisendem
- Polyisobuten (A) oder
- Derivaten von Polyisobuten (B), enthaltend mindestens eine, bevorzugt mindestens zwei isolierte Doppelbindungen, erhältlich sind durch Umsetzung
- mindestens eines Polyisobutenyl-substituierten Bernsteinsäureanhydrids (PIBSA) mit
- mindestens einem ungesättigten Alkohol der Formel

  $$HO\text{-}R^{15}\text{-}CR^{16}{=}CR^{17}R^{18}$$

  und/oder
- mindestens einem einfach ungesättigten Amin der Formel

  $$H_2N\text{-}R^{19}\text{-}CR^{20}{=}CR^{21}R^{22}$$

  oder

  $$HN(\text{-}R^{19}\text{-}CR^{20}{=}CR^{21}R^{22})_2.$$

Die vorliegende Erfindung wird durch die nachstehenden Beispiele illustriert, ohne darauf beschränkt zu sein.

Beispiele

Herstellungsbeispiele

Verbindung 1

Glissopal® 1000 der BASF SE, Ludwigshafen, zahlenmittleres Molegulargewicht Mn (bestimmt per GPC) ca. 1000 g/mol, Polydispersität ca. 1,6, Gehalt an alpha-Doppelbindungen (bestimmt per $^{13}C$ NMR) ca. 88%, beta-Doppelbindungen 6%.

Verbindung 2

Glissopal® 2300 der BASF SE, Ludwigshafen, zahlenmittleres Molegulargewicht Mn (bestimmt per GPC) ca. 2300 g/mol, , Polydispersität ca. 1,8, Gehalt an alpha-Doppelbindungen (bestimmt per $^{13}C$ NMR) ca. 80%, beta-Doppelbindungen 8%.

Verbindung 3

Kommerziell verfügbares, polyisobutenyl-substituiertes Bernsteinsäureanhydrid, basierend auf einem hochreaktiven Polyisobuten mit einem zahlenmittleren Molekulargewicht von ca. 1000 g/mol, erhältlich als Glissopal® SA F von BASF SE, Ludwigshafen, Verseifungszahl 87 mg KOH/g.

Verbindung 4

101,11 g von Verbindung 3 wurden in 100.00 g Toluol gelöst. Die Reaktionsmischung wurde mit 13,21 g (0,13 mol) Diallylamin versetzt und für 2 h bei 120 °C gerührt. Anschließend wurde die Reaktionsmischung auf Raumtemperatur abgekühlt und das Lösungsmittel wurde im Vakuum entfernt (Ausbeute = 112,30 g).

Verbindung 5

122,48 g von Verbindung 3 wurden in 100,00 g Toluol gelöst. Die Reaktionsmischung wurde mit 14,24 g (0,16 mol) Isoprenol versetzt und für 2 h bei 120 °C gerührt. Anschließend wurde die Reaktionsmischung auf Raumtemperatur abgekühlt und das Lösungsmittel wurde im Vakuum entfernt (Ausbeute = 132,00 g).

Verbindung 6

122,48 g von Verbindung 3 wurden in 100,00 g Toluol gelöst. Die Reaktionsmischung wurde mit 10,73 g (0,12 mol) Isoprenol versetzt und für 2 h bei 120 °C gerührt. Anschließend wird die Reaktionsmischung auf Raumtemperatur abgekühlt und das Lösungsmittel wurde im Vakuum entfernt. Anschließend wurde die Reaktionsmischung mit 12,11 g (0,12 mol) Diallylamin versetzt und für 15 h bei 50 °C gerührt (Ausbeute = 122,00 g).

Methodenbeschreibung

Verbesserung des Dispersionskoeffizients

Die Makrodispersion (Dispersions Index Analyse System, DIAS) der unverteilten Füllstoffagglomerate (Partikel) wird bestimmt, indem mittels eines Lichtmikroskops bei 125facher Vergrößerung von mindestens 10 Bildern rechnergestützt die Reflexion der Flächen der Partikel mit der gesamten Beobachtungsfläche verglichen wird. Daraus ergibt sich der Dispersionsgrad (Angabe in Prozent %), wobei über Korrekturfaktoren der Füllstoffvolumengehalt und das Leervolumen der Füllstoffe berücksichtigt wird. Angestrebt wird ein hoher Dispersionskoeffizient.

Bestimmung der Partikelgröße

Der mittlere Durchmesser der Partikel wurde optisch zusammen mit der Berechnung des Dispersionskoeffizients bestimmt.
Eine geringe Partikelgröße ist vorteilhaft.

Nassgriff bei niedrigen Temperaturen (-10 °C) und Rollwiderstand

Von der hergestellten Kautschukmasse wird ein Streifenprüfkörper (40 × 10 × 2 mm) in einem ARES-Prüfgerät der Firma Rheometric Scientific™ einer dynamisch-mechanischen Analyse (DMA) unterzogen.

Messparameter:

Temperaturbereich -60 bis 80 °C
Frequenz 1 Hz
Amplitude 0,5 %

Der tan(δ)-Wert bei -10 °C wird als Maß für die Traktion auf nasser Fahrbahn bei niedriger Temperatur angesehen, der tan(δ)-Wert bei +60 °C als Maß für den Rollwiderstand. Hohe Werte für $\tan(\delta)_{-10°C}$ bedeuten einen hohen Nassgriff und sind vorteilhaft, niedrige Werte für $\tan(\delta)_{60°C}$ bedeuten einen geringen Rollwiderstand und sind anzustreben.

Abriebsbeständigkeit

Der Abrieb wurde nach DIN ISO 4649 in einer Abriebsapparatur der Fa. Frank bei einer Last von 10 N über eine Gleitlänge von 40 m und einer Rotation von 40 $m^{-1}$ bestimmt. Der Abriebsindex wird in Prozent [%] angegeben, höhere Werte sind positiv.

Absenkung der Viskosität während der Verarbeitung

Die Komponenten der Kautschukmassen wurden in den angegebenen Verhältnissen miteinander vermischt und die Mooney-Viskosität der Masse bei einer Temperatur von 100 °C bei 2 Umdrehungen/min in einem Mooney-Meter Alpha Technologies MV 2000 E (Mooney ML (1+4) 100 °C) bestimmt.
Gemessen wir die Viskosität in Mooney-Einheiten (ME), niedrige Werte bedeuten eine niedrige Viskosität.

Abfangen von während der Verarbeitung freigesetztem Ethanol

Silika und die zu untersuchende Probe wurden im Verhältnis 1:1 vermischt und in einer 2 g Headspace Flasche mit einem Septum luftdicht abgeschlossen. Die Mischungen wurden 30 Minuten auf 140 °C erwärmt und die Gasphase per Gaschromatographie (Agilent 6890N) analysiert:
Injektortemperatur: 140 °C, Säule: 60m Kapillarsäule VF-5ms, Säulentemperatur: 40 °C 4 min isotherm, dann mit einer Heizrate von 10 °C/min bis auf 280 °C isotherm, Detektor: Agilent-Massenselektiver Detektor 5975C, Trägergas: Helium.
Aus arbeitsschutzrechtlichen Gründen sind niedrige Werte vorteilhaft.

Anwendungsbeispiele

Es wurden Silica-haltige ("Referenz") Kautschukmassen als Vergleich bzw. mit den erfindungsgemäßen Additiven hergestellt mit folgender Zusammensetzung:

| | | Menge [phr] |
|---|---|---|
| **Funktion** | **Bezeichnung** | **Referenz** |
| Kautschuk | SBR (high-Tg) NS616 1) | 100 |
| Silica | U7000 GR 2) | 80 |
| Silan | Si 69 3) | 8 |
| Weichmacher | Vivatec 500 | 37,5 |
| Aktivator | ZnO | 2,5 |
| Aktivator | Stearinsäure | 1 |
| Antioxidant | IPPD 4) | 2 |
| Beschleuniger | DPG 5) | 2 |
| Beschleuniger | CBS 6) | 1,7 |
| Vernetzer | Schwefel | 1,4 |

1) Kautschuk Nipol NS616 (modifiziertes S-SBR, Styrolgehalt: 20 Gew%, Vinylgruppengehalt: 67 mol%, SP Wert: 17,25 $(J/cm^3)^{1/2}$, Tg: -25°C, Mw: 510,000, non-oil-extended) hergestellt durch ZEON CORPORATION (SBR1 in EP 3263360 A1, Absatz [0054])
2) Amorphes $SiO_2$, Ultrasil 7000 GR von Evonik
3) Bis(triethoxysilylpropyl)tetrasulfid
4) IPPD: N-Isopropyl-N'-phenyl-1,4-phenylenediamin
5) DPG: N,N'-Diphenylguanidin
6) CBS: N-Cyclohexylbenzothiazol-2-sulfenamid

Erfindungsgemäße Kautschukmassen

Durch Zusatz der angegebenen Menge der erfindungsgemäßen Verbindungen wurden Silica-haltige Kautschukmassen K4 bis K6 analog der Silica-haltigen Referenzkautschukmasse "Referenz" hergestellt. Zum Ausgleich wurde teilweise der Anteil an Weichmacher entsprechend verringert.

| | | | | Menge [phr] | | |
|---|---|---|---|---|---|---|
| **Funktion** | **Bezeichnung** | **K1** | **K2** | **K4** | **K5** | **K6** |
| Kautschuk | SBR (high- | 100 | 100 | 100 | 100 | 100 |
| | Tg) NS616 | | | | | |
| Silica | U7000 GR | 80 | 80 | 80 | 80 | 80 |
| Silan | Si 69 | 8 | 8 | 8 | 8 | 8 |
| | Verbindung 1 | 5 | | | | |
| | Verbindung 2 | | 5 | | | |
| | Verbindung 4 | | | 5 | | |
| | Verbindung 5 | | | | 5 | |
| | Verbindung 6 | | | | | 5 |
| Weichmacher | Vivatec 500 | 32,5 | 32,5 | 32,5 | 32,5 | 32,5 |
| Aktivator | ZnO | 2,5 | 2,5 | 2,5 | 2,5 | 2,5 |
| Aktivator | Stearinsäure | 1 | 1 | 1 | 1 | 1 |
| Antioxidant | IPPD | 2 | 2 | 2 | 2 | 2 |
| Beschleuniger | DPG | | 2 | | 2 | 2 |
| Beschleuniger | CBS | 1,35 | 1,7 | 1,35 | 1,7 | 1,7 |
| Vernetzer | Schwefel | 1,35 | 1,4 | 1,35 | 1,4 | 1,4 |

Diese erfindungsgemäßen Kautschukmassen wurden in den angegebenen Anwendungsbeispielen mit der Silica-haltigen Referenzkautschukmasse "Referenz" verglichen.

Beispiel 1 (Verbesserung des Dispersionskoeffizients)

| | Dispersionskoeffizient [%] |
|---|---|
| Referenz | 61 |
| K1 | 66 |
| K2 | 66 |
| K4 | 64 |
| K5 | 79 |
| K6 | 72 |

Beispiel 2 (Verringerung der Partikelgröße)

| | Partikelgröße |
|---|---|
| Referenz | 180 |
| K2 | 149 |
| K4 | 135 |
| K5 | 130 |
| K6 | 142 |

Beispiel 3 (Nassgriff bei niedrigen Temperaturen (-10 °C))

| | Nassgriff ($\tan(\delta)_{-10°C}$) |
|---|---|
| Referenz | 0,83 |
| K4 | 1,09 |
| K5 | 1,04 |
| K6 | 1,02 |

Beispiel 4 (Rollwiderstand)

| | Rollwiderstand ($\tan(\delta)_{60°C}$) |
|---|---|
| Referenz | 0,14 |
| K1 | 0,073 |
| K2 | 0,11 |
| K4 | 0,039 |
| K5 | 0,045 |
| K6 | 0,046 |

Beispiel 5 (Abriebsbeständigkeit)

| | Abriebsindex [%] |
|---|---|
| Referenz | 129 |
| K4 | 140 |
| K5 | 140 |
| K6 | 134 |

Beispiel 6 (Absenkung der Viskosität während der Verarbeitung)

| | ML 1+4 [ME] |
|---|---|
| Referenz | 65,4 |
| K1 | 56,5 |
| K2 | 64,6 |

**Patentansprüche**

**1.** Verwendung von mindestens eine Doppelbindung aufweisendem

- Polyisobuten (A) oder
- Derivaten von Polyisobuten (B)

zur Verbesserung mindestens einer der folgenden Eigenschaften
- Dispersionskoeffizient
- Teilchengröße
- Nasshaftung
- Abriebsfestigkeit
- Rollwiderstand

von Kautschuke-enthaltenden Reifen
oder zum Abfangen von Alkoholen, die während der Reifenherstellung freigesetzt werden,
wobei die Polyisobutenderivate (B), enthaltend mindestens eine, bevorzugt mindestens zwei isolierte Doppelbindungen, erhältlich sind durch Umsetzung

- mindestens eines Polyisobutenyl-substituierten Bernsteinsäureanhydrids (PIBSA) mit
- mindestens einem ungesättigten Alkohol der Formel

$$HO\text{-}R^{15}\text{-}CR^{16}\text{=}CR^{17}R^{18}$$

und/oder
- mindestens einem einfach ungesättigten Amin der Formel

$$H_2N\text{-}R^{19}\text{-}CR^{20}\text{=}CR^{21}R^{22}$$

oder

$$HN(\text{-}R^{19}\text{-}CR^{20}\text{=}CR^{21}R^{22})_2,$$

worin

$R^{15}$ ein zweibindiger optional mit Heteroatomen unterbrochener organischer Rest, bevorzugt ein optional mit Heteroatomen unterbrochener aliphatischer organischer Rest und besonders bevorzugt ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere Methylen ist,
$R^{16}$, $R^{17}$ und $R^{18}$ unabhängig voneinander Wasserstoff oder $C_1$- bis $C_6$-Alkyl, bevorzugt Wasserstoff oder $C_1$- bis $C_4$-Alkyl, besonders bevorzugt Wasserstoff oder Methyl, Ethyl, n-Propyl, iso-Propyl, n-Butyl oder tert-Butyl, ganz besonders bevorzugt Wasserstoff oder Methyl, Ethyl oder n-Butyl,
$R^{19}$ ein zweibindiger Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen und 1,6-Hexylen, insbesondere Methylen ist, und
$R^{20}$, $R^{21}$ und $R^{22}$ unabhängig voneinander Wasserstoff oder $C_1$- bis $C_6$-Alkyl, bevorzugt Wasserstoff oder $C_1$- bis $C_4$-Alkyl, besonders bevorzugt Wasserstoff oder Methyl, Ethyl, n-Propyl, iso-Propyl, n-Butyl oder tert-Butyl, ganz besonders bevorzugt Wasserstoff oder Methyl, Ethyl oder n-Butyl
bedeuten.

**2.** Verwendung gemäß einem der vorstehenden Ansprüche, **dadurch gekennzeichnet, daß** der Kautschuk einen Isobuten-Isopren-Kautschuk enthält.

**3.** Verwendung gemäß einem der vorstehenden Ansprüche, **dadurch gekennzeichnet, daß** der Kautschuk einen Styrol-Butadien-Kautschuk enthält.

**4.** Verwendung gemäß einem der vorstehenden Ansprüche, **dadurch gekennzeichnet, daß** der Kautschuk einen Naturkautschuk enthält.

**5.** Verwendung gemäß einem der vorstehenden Ansprüche, besonders der Verbindungen (B) zur Verbesserung gleichzeitig mindestens zweier, bevorzugt aller drei der folgenden Eigenschaften

- Nasshaftung
- Abreibsfestigkeit
- Rollwiderstand

von Kautschuke-enthaltenden Reifen.

**6.** Verwendung gemäß einem der Ansprüche 1 bis 5, besonders der Verbindungen (B) zur Verringerung von Mikroplastik aus Abrieb von Reifen.

**7.** Verfahren zur Absenkung der Viskosität von Kautschukmassen in der Herstellung von Kautschuke-enthaltenden Reifen, in dem man

- mindestens einen Kautschuk mit
- Ruß und/oder Silikaten und
- mindestens einem Prozesshilfsmittel und/oder Additiv zur Verbesserung mindestens einer Gebrauchseigenschaft des Reifens

in einem Kneter und/oder Extruder vermischt,
**dadurch gekennzeichnet, dass** man der Kautschukmasse vor und/oder während der Verarbeitung mindestens ein Polyisobuten und/oder mindestens ein Polyisobuten (A) oder Polyisobutenderivat (B) wie beschrieben in Anspruch 1 zusetzt.

**8.** Verwendung von Polyisobuten (A) und/oder Polyisobutenderivaten (B) wie beschrieben in Anspruch 1 zur Absenkung der Viskosität von Kautschukmassen in der Herstellung von Kautschuke-enthaltenden Reifen.

**9.** Verwendung und Verfahren gemäß einem der vorstehenden Ansprüche, **dadurch gekennzeichnet, daß** das Polyisobuten (A) ein zahlenmittleres Molekulargewicht Mn von 300 bis zu 10000 g/mol und einen Gehalt an Isomeren mit alpha-Doppelbindung von mindestens 70% aufweist.

**10.** Verwendung und Verfahren gemäß einem der Ansprüche 1 bis 8, **dadurch gekennzeichnet, daß** das Polyisobuten (A) ein zahlenmittleres Molekulargewicht Mn von mehr als 10000 bis zu 100000 g/mol und einen Gehalt an Isomeren mit alpha-Doppelbindung von mindestens 20 bis 60% aufweist.

**11.** Verwendung und Verfahren gemäß einem der Ansprüche 1 bis 8, **dadurch gekennzeichnet, daß** der ungesättigte Alkohol ausgewählt ist aus der Gruppe bestehend aus Allylalkohol, Methallylalkohol, But-2-en-1-ol, But-3-en-1-ol, 3-Methylbut-2-en-1-ol, 3-Methylbut-3-en-1-ol, 4-Hydroxybutyl vinylether, 2-Hydroxyethyl(meth)acrylat, 2-Hydroxypropyl(meth)acrylat, 4-Hydroxypropyl(meth)acrylat, 4-Hydroxybutyl(meth)acrylat, 6-Hydroxyhexyl(meth)acrylat, Trimethylolpropan di(meth)acrylat, Pentaerythit tri(meth)acrylat, Geraniol, Farnesol und Linalool.

**12.** Verwendung und Verfahren gemäß einem der Ansprüche 1 bis 8, **dadurch gekennzeichnet, daß** das mindestens eine ungesättigte Amin ausgewählt ist aus der Gruppe bestehend aus Allylamin, Methallylamin und Diallylamin.

**13.** Verwendung und Verfahren gemäß einem der Ansprüche 1 bis 8, **dadurch gekennzeichnet, daß** das bei der Herstellung der Polyisobutenderivate (B) eingesetzte Polyisobutenyl-substituierten Bernsteinsäureanhydrids einen Bismaleinierungsgrad von mindestens 5% bis zu 100%, bevorzugt 10 bis 50% aufweist.

**14.** Kautschukmasse, enthaltend

- mindestens einen Kautschuk, ausgewählt aus der Gruppe bestehend aus Isobuten-Isopren-Kautschuk, Styrol-Butadien-Kautschuk und Naturkautschuk sowie deren Mischungen,
- mindestens einen Füllstoff, ausgewählt aus der Gruppe bestehend aus Kalziumcarbonat, Tone, Glimmer, Kieselerde, Silikate, Talkum, Bentonit, Titandioxid, Aluminiumoxid, Zinkoxid und Ruß,
- mindestens einem Antioxidans, bevorzugt einem p-Phenylendiamin,
- mindestens einem Peroxid und/oder Polyamin als Härter und/oder Vernetzer,
- mindestens einem Aktivatoren für den Vulkanisierungsprozeß ausgewählt aus der Gruppe bestehend aus Aminen, Diaminen, Guanidinen, Thioharnstoffen, Thiatolen, Thiramen, Sulfenamiden, Sulfenimiden, Thiocarbamaten und Xanthaten,
- mindestens einem Silanvernetzer ausgewählt aus der Gruppe bestehend aus Bis(($C_1$-$C_4$)alkoxy($C_1$-$C_4$)alkylsilyl($C_1$-$C_4$)alkyl)polysulfide, (besonders Disulfide, Trisulfide oder Tetrasulfide), Bis(3-trimethoxysilylpropyl), Bis(3-triethoxysilylpropyl)polysulfid, Bis(3-triethoxysilylpropyl)tetrasulfid (TESPT) der Formel $[(C_2H_5O)_3Si(CH_2)_3S_2]_2$, und Bis(triethoxysilylpropyl)disulfid (TESPD) der Formel $[(C_2H_5O)_3Si(CH_2)_3S]_2$, und
- mindestens eine Doppelbindung aufweisendem
- Polyisobuten (A) oder
- Derivaten von Polyisobuten (B), enthaltend mindestens eine, bevorzugt mindestens zwei isolierte Doppelbindungen, erhältlich sind durch Umsetzung
- mindestens eines Polyisobutenyl-substituierten Bernsteinsäureanhydrids (PIBSA) mit
- mindestens einem ungesättigten Alkohol der Formel

$$HO\text{-}R^{15}\text{-}CR^{16}{=}CR^{17}R^{18}$$

und/oder
- mindestens einem einfach ungesättigten Amin der Formel

$$H_2N\text{-}R^{19}\text{-}CR^{20}{=}CR^{21}R^{22}$$

oder

$$HN(\text{-}R^{19}\text{-}CR^{20}{=}CR^{21}R^{22})_2$$

wie definiert in Anspruch 1.

Europäisches Patentamt
European Patent Office
Office européen des brevets

# EUROPÄISCHER RECHERCHENBERICHT

Nummer der Anmeldung
EP 23 21 1667

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 294 127 B1 (BRIDGESTONE CORP [JP]) 20. April 2016 (2016-04-20) * Ansprüche 1, 19 * ----- | 1-14 | INV. C08L9/06 C08F8/06 C08F8/32 |
| A | EP 3 786 192 A1 (DAELIM IND CO LTD [KR]) 3. März 2021 (2021-03-03) * Anspruch 1 * ----- | 1-14 | |
| A | WO 2022/223345 A1 (BASF SE [DE]) 27. Oktober 2022 (2022-10-27) * Anspruch 1; Beispiel 3 * ----- | 1-14 | |
| A | CN 113 621 328 A (CHENG SHIN RUBBER CHINA CO LTD) 9. November 2021 (2021-11-09) * Ansprüche 1-4; Beispiele 1-3 * ----- | 1-14 | |

RECHERCHIERTE SACHGEBIETE (IPC)
C08L
C08F

Der vorliegende Recherchenbericht wurde für alle Patentansprüche erstellt

1

| Recherchenort | Abschlußdatum der Recherche | Prüfer |
|---|---|---|
| München | 23. Mai 2024 | Höfler, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 23 21 1667

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-05-2024

| Im Recherchenbericht angeführtes Patentdokument | Datum der Veröffentlichung | Mitglied(er) der Patentfamilie | Datum der Veröffentlichung |
|---|---|---|---|
| EP 2294127 B1 | 20-04-2016 | CN 102131856 A | 20-07-2011 |
| | | EP 2294127 A2 | 16-03-2011 |
| | | ES 2582231 T3 | 09-09-2016 |
| | | JP 2011526327 A | 06-10-2011 |
| | | US 2011098378 A1 | 28-04-2011 |
| | | WO 2009158604 A2 | 30-12-2009 |
| EP 3786192 A1 | 03-03-2021 | CN 112409511 A | 26-02-2021 |
| | | EP 3786192 A1 | 03-03-2021 |
| | | JP 7068400 B2 | 16-05-2022 |
| | | JP 2021031680 A | 01-03-2021 |
| | | US 2021054116 A1 | 25-02-2021 |
| WO 2022223345 A1 | 27-10-2022 | BR 112023021769 A2 | 26-12-2023 |
| | | CA 3217514 A1 | 27-10-2022 |
| | | CN 117242133 A | 15-12-2023 |
| | | EP 4326813 A1 | 28-02-2024 |
| | | JP 2024514668 A | 02-04-2024 |
| | | KR 20230170914 A | 19-12-2023 |
| | | WO 2022223345 A1 | 27-10-2022 |
| CN 113621328 A | 09-11-2021 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 200770063 A
- DE 19941166 A1
- WO 2009158604 A
- WO 2019199839 A1
- FR 1436607 A
- EP 157703 A
- DE 69206445 T2
- WO 201240859 A1
- WO 2023152258 A
- WO 2017216022 A
- US 5883196 A
- EP 3263360 A1

### In der Beschreibung aufgeführte Nicht-Patentliteratur

- **GUO et al.** *Journal or Polymer Science, Part A: Polymer Chemistry*, 2013, vol. 51, 4200-4212